(19)

Europäisches
Patentamt
European
Patent Office
Office européen
des brevets

(11) **EP 3 787 304 A1**

(12) **EUROPEAN PATENT APPLICATION**
published in accordance with Art. 153(4) EPC

(43) Date of publication:
**03.03.2021 Bulletin 2021/09**

(21) Application number: **19792521.7**

(22) Date of filing: **06.02.2019**

(51) Int Cl.:
*H04N 21/485* (2011.01)     *G06F 3/01* (2006.01)
*G06F 3/16* (2006.01)     *G09G 5/00* (2006.01)
*H04N 21/442* (2011.01)

(86) International application number:
**PCT/JP2019/004212**

(87) International publication number:
**WO 2019/207900 (31.10.2019 Gazette 2019/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.04.2018 JP 2018082948**

(71) Applicant: **Sony Corporation**
**108-0075 Tokyo (JP)**

(72) Inventors:
• **IKENAGA, Mari**
**Tokyo 108-0075 (JP)**
• **YAMAMOTO, Kazunori**
**Tokyo 108-0075 (JP)**
• **YUKI, Taichi**
**Tokyo 108-0075 (JP)**
• **SATO, Naoyuki**
**Tokyo 108-0075 (JP)**

(74) Representative: **2SPL Patentanwälte PartG mbB**
**Postfach 15 17 23**
**80050 München (DE)**

(54) **INFORMATION PROCESSING DEVICE AND INFORMATION PROCESSING METHOD**

(57) Output settings such as an image quality, a sound volume, and a sound quality made for an apparatus that outputs an image and a sound are brought into an appropriate state for a user without placing an operation load on the user. For this purpose, an information processing device inputs, as an analysis target, a signal obtained by a sensing apparatus, and subjects analysis target data based on the input signal to analysis including user identification. Subsequently, output settings that are settings related to image output or audio output are made by using user identification information obtained by the user identification.

*FIG. 9*

**EP 3 787 304 A1**

**Description**

TECHNICAL FIELD

The present technology relates to an information processing device, and an information processing method, and in particular, relates to a technical field related to image and audio settings for an output apparatus that outputs an image and a sound.

BACKGROUND ART

With respect to, for example, a television device or the like, an energy saving countermeasure function that includes, for example, screen-off/sound-off when no person exists, and a function of setting image and sound qualities corresponding to a genre, are known.
For example, the following Patent Document 1 discloses the technology in which image quality settings are made on the basis of a genre.

CITATION LIST

PATENT DOCUMENT

Patent Document 1: Japanese Patent Application Laid-Open No. 2008-28871

SUMMARY OF THE INVENTION

PROBLEMS TO BE SOLVED BY THE INVENTION

However, in actuality, a genre, and image and sound qualities desired by each user, may subtly differ. Even in the case of settings corresponding to a genre, there is also a case where the settings are not the most suitable for each individual user.
Therefore, even if a setting function of setting image and sound qualities corresponding to a program genre is provided, in order to make settings in more detail in accordance with favorites of each user, operation that is troublesome for the user is required, the operation including, for example, performing setting change operation using a remote controller. In addition, under these circumstances, there is also a possibility that a function of making output settings of a television device or the like will not be made full use of.
Accordingly, the present disclosure provides a technology in which settings of appropriate image and sound qualities can be made in accordance with not only a genre of a content such as a program but also a situation on the spot, and without an operation load.

SOLUTIONS TO PROBLEMS

An information processing device according to the present technology includes: an input management unit that inputs, as an analysis target, a signal obtained by a sensing apparatus; an analysis unit that subjects analysis target data based on the signal input by the input management unit to analysis including user identification; and an output setting control unit that makes output settings by using user identification information obtained by the user identification of the analysis unit, the output settings being settings related to image output or audio output.
There is assumed, for example, an information processing device that is built into an electronic apparatus such as a television device and an audio device, or serves as a device being provided separately from these electronic apparatuses and cooperating therewith. This information processing device inputs a signal (for example, an image signal and an audio signal) obtained by a sensing apparatus, and analyzes the signal to perform user identification. For example, the information processing device identifies a user who exists in front of the television device or the like. Subsequently, by using user identification information, the information processing device makes, for example, settings (output settings) related to image output or audio output by the television device or the like.
In the information processing device according to the present technology described above, it is considered that the output setting control unit makes the output settings by using information obtained on the basis of the user identification information.
For example, on the basis of a result of identification of a user who exists in front of an apparatus such as a television device, the output setting control unit obtains information of output setting values for the user, and makes output settings by using the information.

The user identification information is information used to perform some kind of identification related to a user, the user identification information including, for example, information for identifying each individual user, information for identifying attributes of a user, and the like.

In the information processing device according to the present technology described above, it is considered that the output setting control unit makes the output settings by using user identification information, and content information related to a content that is being output from an image or audio output apparatus.

For example, output settings are made by combining content information indicating contents, a type, and the like of a content that is being viewed by an output apparatus such as a television device with the user identification information.

The content information is information that can distinguish a content, such as a title of the content and a genre of the content.

In the information processing device according to the present technology described above, it is considered that there is provided a user information management unit that performs storage management of the output settings corresponding to a combination of user identification information and content information.

This user information management unit performs processing of storing image output settings and audio output settings, which are considered to be usually made by a user, in an internal or external storage device in combinations of each individual user, user's attribute, or the like and a content such as an individual program or a genre or the like of the content. The user information management unit is capable of reading, from a storage unit, output settings that are estimated to be appropriate corresponding to a combination of user identification information and content information.

In the information processing device according to the present technology described above, it is considered that the user information management unit updates stored contents of the output settings corresponding to a combination of user identification information and content information by using user's operation information related to image output settings or audio output settings.

The user information management unit learns and updates, for example, storage of output setting values corresponding to a combination of an individual user and a content such as an individual program according to a user's operation history.

In the information processing device according to the present technology described above, it is considered that in a case where a plurality of users has been detected on the basis of user identification information, the output setting control unit selects a target user, and makes the output settings corresponding to the target user.

For example, in such a situation in which a plurality of persons exists in front of a television device, the output setting control unit selects a main user from among the persons as a target user. Subsequently, the output setting control unit makes image output settings and audio output settings that are fitted to the selected user.

In the information processing device according to the present technology described above, it is considered that the output setting control unit selects a target user by using user attribute information.

For example, in a situation in which a plurality of persons exists, attributes such as an age of each user are checked, and the attributes are used as one element for selecting a target user.

In the information processing device according to the present technology described above, it is considered that the output setting control unit selects a target user by using information related to the concentration degree of a user.

For example, in a situation in which a plurality of persons exists, a concentration degree of each user is measured, and a result of the measurement is used as one element for selecting a target user.

In the information processing device according to the present technology described above, it is considered that the output setting control unit selects a target user by using interest degree information of a user.

For example, in a situation in which a plurality of persons exists, an interest degree of each user is determined, and a result of the determination is used as one element for selecting a target user.

In the information processing device according to the present technology described above, it is considered that the output setting control unit selects a target user by using information of a purchaser of a content that is being output from an image or audio output apparatus.

For example, in a situation in which a plurality of persons exists, a content purchaser is determined, and a result of the determination is used as one element for selecting a target user.

In the information processing device according to the present technology described above, it is considered that the output setting control unit selects a target user by using information of a distance from an image or audio output apparatus.

For example, in a situation in which a plurality of persons exists in front of a television device, information of a distance from the television device is obtained, and the distance is used as one element for selecting a target user.

In the information processing device according to the present technology described above, it is considered that processing of recognizing a user's operation instruction from an input signal obtained by the sensing apparatus is performed.

For example, in a case where a user indicates an intention of operation by a voice, a gesture, or the like, the voice, the gesture, or the like can be recognized.

In the information processing device according to the present technology described above, it is considered that by subjecting an audio input signal obtained by the sensing apparatus to language determination related to the output settings, processing of determining contents of a user's operation instruction is performed.

In other words, with respect to a voice uttered by a user, what uttered contents are intended for are recognized by referring to, for example, a database. Contents of a voice operation instruction are determined in this manner.

In the information processing device according to the present technology described above, it is considered that the output settings are image quality settings of an output image of an image output apparatus.

For example, as an image quality of an image output apparatus such as a television device, settings related to an image quality such as brightness, color, sharpness, contrast, and noise reduction are made.

In the information processing device according to the present technology described above, it is considered that the output settings are settings of a sound volume or sound quality of an output sound of an audio output apparatus.

For example, settings related to a sound volume level and a sound quality (for example, low-frequency emphasis, high-frequency emphasis, equalizing, noise cancellation, etc.) are made for an audio output apparatus such as an audio apparatus and a television device.

Another information processing device according to the present technology is provided with: an input management unit that inputs, as an analysis target, a signal obtained by a sensing apparatus; and an analysis information obtaining unit that obtains information for settings related to image output or audio output as an analysis result of analyzing analysis target data based on the signal input by the input management unit.

There is assumed, for example, an information processing device that is built into an electronic apparatus such as a television device and an audio device, or serves as a device being provided separately from these electronic apparatuses and cooperating therewith. This information processing device inputs a signal (for example, an image signal and an audio signal) obtained by the sensing apparatus. In addition, an analysis result of analyzing such an input signal, for example, setting information related to image output or audio output, information of a user identification result, and the like are obtained by internal analysis or external analysis.

In the another information processing device according to the present technology described above, it is considered that the analysis information obtaining unit transmits analysis target data to an external analytical engine, and obtains information for settings related to image output or audio output from the analytical engine.

For example, analysis target data based on an input voice and an input image is transmitted to the analytical engine through network communication, and the external analytical engine is caused to execute the analysis itself.

An information processing method according to the present technology is an information processing method executed by an information processing device, the method including: inputting, as an analysis target, a signal obtained by a sensing apparatus; subjecting analysis target data based on the input signal to analysis including user identification; and making output settings that are settings related to image output or audio output by using user identification information obtained by the user identification.

In other words, a current situation is recognized by sensing, and output settings corresponding to the current situation are executed.

Another information processing method according to the present technology is an information processing method executed by an information processing device, the method including: inputting, as an analysis target, a signal obtained by a sensing apparatus; and obtaining information for settings related to image output or audio output as an analysis result of analyzing analysis target data based on the input signal.

In other words, a current situation is recognized by sensing, and information for output settings corresponding to the current situation is obtained.

EFFECTS OF THE INVENTION

According to the present technology, output setting control can be performed in response to a current situation, in particular, a user situation, determined on the basis of sensing. Consequently, output settings corresponding to the situation are executed without placing an operation load on a user, and a comfortable viewing environment can be realized.

It should be noted that the effects described herein are not necessarily limited, and may be any one of the effects described in the present disclosure.

BRIEF DESCRIPTION OF DRAWINGS

Fig. 1 is an explanatory drawing illustrating a system configuration example according to an embodiment of the present technology.

Fig. 2 is a block diagram illustrating an agent device according to the embodiment.
Fig. 3 is a block diagram illustrating a television device according to the embodiment.
Fig. 4 is a block diagram illustrating a functional configuration of a computation unit according to the embodiment.
Fig. 5 is a block diagram illustrating a computer device according to the embodiment.
Fig. 6 is a block diagram illustrating a television device that includes the agent device according to the embodiment.
Fig. 7 is a block diagram illustrating the agent device that uses an external analytical engine according to the embodiment.
Fig. 8 is a block diagram illustrating a television device including the agent device that uses the external analytical engine according to the embodiment.
Fig. 9 is a flowchart illustrating output setting control processing according to the first embodiment.
Fig. 10 is an explanatory drawing illustrating setting management information according to the embodiment.
Fig. 11 is a flowchart illustrating processing for learning setting management information according to the embodiment.
Fig. 12 is a flowchart illustrating target user selection processing according to a second embodiment.
Fig. 13 is a flowchart illustrating target user selection processing according to a third embodiment.
Fig. 14 is a flowchart illustrating output setting control processing according to a fourth embodiment.
Fig. 15 is a flowchart illustrating output setting control processing according to a fifth embodiment.
Fig. 16 is a flowchart illustrating output setting control processing according to a sixth embodiment.

## MODE FOR CARRYING OUT THE INVENTION

The embodiments will be described below in the following order.

<1. System configuration>
<2. First configuration example: Agent device>
<3. Second configuration example: Agent device that is built into output apparatus>
<4. Third and fourth configuration examples: Configuration that uses external analytical engine>
<5. Processing according to first embodiment: Settings made in response to situation>
<6. Processing according to second embodiment: Multiuser support I>
<7. Processing according to third embodiment: Multiuser support II>
<8. Processing according to fourth embodiment: Use of external analytical engine>
<9. Summary and modified examples>

<1. System configuration>

First of all, a configuration example of a system including an agent device 1 will be described as an embodiment.

It should be noted that the agent device 1 described in the present embodiment is a device that includes an information processing device, and performs, to an output apparatus for outputting a sound and an image, control in response to a user's instruction or a situation, or supplies the output apparatus with information required for the control.

More specifically, the agent device 1 receives input of surrounding sounds collected by a microphone, surrounding captured images image-captured by an image capturing device, and surrounding detection signals obtained by other various sensing apparatuses. In addition, the agent device 1 is a device that recognizes a current situation and a user's operation instruction on the basis of the input signals, and is capable of controlling the output apparatus such as a television device according thereto.

In addition, the embodiment mentions a television device 2 as an example of the output apparatus for outputting an image and a sound. Needless to say, the television device 2 is merely an example. For example, various devices such as an audio device, an interaction device, a robot, a personal computer device, and a terminal device are assumed as the output device that cooperates with the agent device 1. Operation of the television device 2 described in the embodiment can also be similarly applied to these various output apparatuses.

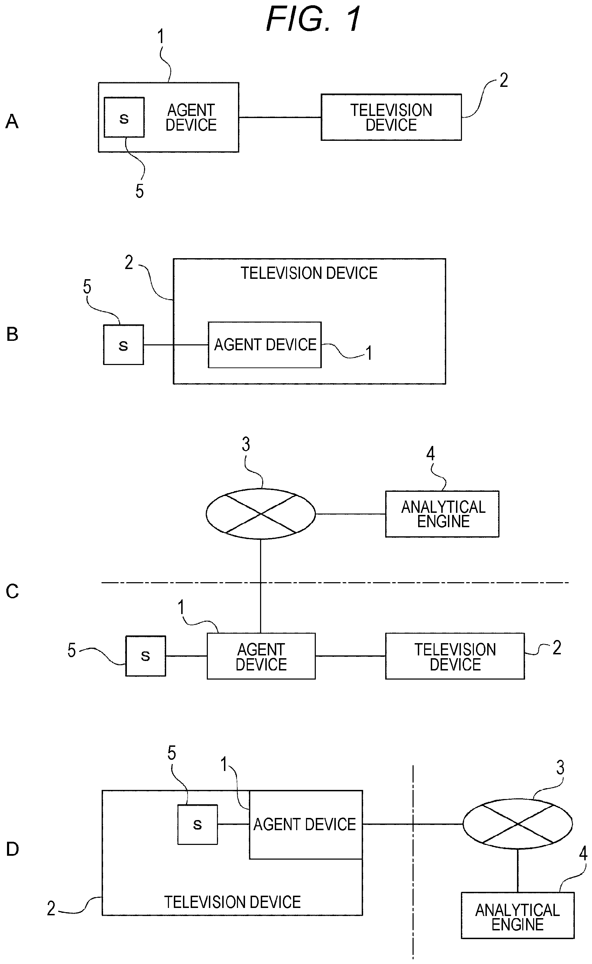

Fig. 1A shows a system configuration example of a system that includes such an agent device 1 and television device 2.

The agent device 1 is provided separately from the television device 2.

In addition, a sensing apparatus 5 is built into the agent device 1 in the example.

As the sensing apparatus 5, for example, a microphone, an image capturing device (camera), a touch sensor, a load sensor, an illuminance sensor, an infrared sensor, an acceleration sensor, an angular speed sensor, a laser sensor, and all other sensors are assumed.

Here, the sensing apparatus 5 is built into the agent device 1 in the example. However, needless to say, the sensing apparatus 5 may be provided separately from the agent device 1.

Moreover, as the sensing apparatus 5, a sensing device that is built into an apparatus such as a smartphone and a wearable device can also be assumed. In this case, if being considered on the basis of the configuration example of Fig. 1A, it can also be considered that a smartphone and a wearable device itself becomes the agent device 1.

The agent device 1 makes output settings of the television device 2 on the basis of information obtained from the sensing apparatus 5. The output settings according to the present embodiment are settings related to image output or audio output. The settings related to image output are settings that cause image output to change, and include, for example, brightness settings, color settings, sharpness, contrast, noise reduction, and the like. In addition, the settings related to audio output are settings that cause audio output to change, and include sound volume level settings and sound quality settings. The sound quality settings include, for example, low-frequency emphasis, high-frequency emphasis, equalizing, noise cancellation, reverb, echo, and the like.

The agent device 1 makes these output settings, and instructs the television device 2 to make the settings. For example, the agent device 1 supplies setting information to the television device 2. Alternatively, the agent device 1 may directly control an image output system and an audio output system of the television device 2 on the basis of the output settings.

Fig. 1B shows an example in which the agent device 1 is built into the television device 2, and the sensing apparatus 5 is provided separately from the television device 2.

In this manner, it is also considered that the agent device 1 is built into an image and audio output apparatus.

In addition, there is also a case where components including the sensing apparatus 5 are built into the output apparatus such as the television device 2.

Fig. 1C shows a case where the agent device 1, the television device 2, and the sensing apparatus 5 are provided separately from one another. In addition, the agent device 1 is communicatable with an external analytical engine 4 through a network 3.

Fig. 1D shows an example in which the agent device 1 and the sensing apparatus 5 are built into the television device 2. In addition, in this case, the agent device 1 is communicatable with the external analytical engine 4 through the network 3.

As shown in Figs. 1C and 1D, in a case where the agent device 1 is capable of communicating with the external analytical engine 4, the agent device 1 is capable of causing the analytical engine 4 to execute required analysis processing. The analytical engine 4 is, for example, an artificial intelligence (AI) engine, and is capable of transmitting appropriate output setting information and user identification information to the agent device 1 on the basis of analysis data that has been input.

The network 3 is only required to be a transmission path through which the agent device 1 is capable of communicating with an apparatus outside the system. There are assumed various forms including, for example, the Internet, a local area network (LAN), a virtual private network (VPN), an intranet, an extranet, a satellite communication network, a community antenna television (CATV) communication network, a telephone network, a mobile communication network, and the like.

Each of the configurations described above is merely an example, and thus besides the above, there can be considered various modes of actual configurations including the agent device 1, the television device 2 (output apparatus), the sensing apparatus 5, and the like.

<2. First configuration example: Agent device>

As a first configuration example, a configuration example of the agent device 1 and the television device 2, which is the example based on Fig. 1A described above, will be described.

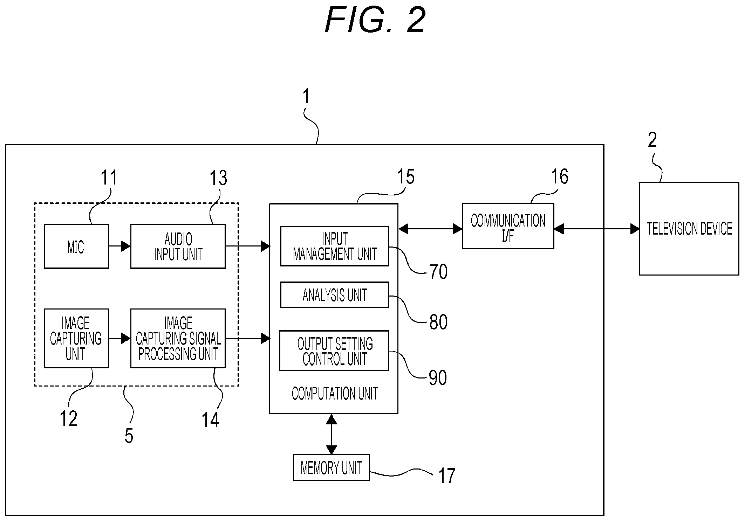

Fig. 2 shows a block diagram of the agent device 1. This is an example in which the agent device 1 has the built-in sensing apparatus 5.

The agent device 1 is provided with the sensing apparatus 5, a computation unit 15, and a communication interface 16.

In this example, the sensing apparatus 5 includes a microphone 11, an image capturing unit 12, an audio input unit 13, and an image capturing signal processing unit 14.

Ambient sounds are collected by the microphone 11, and are output as an audio signal. The audio input unit 13 subjects the audio signal obtained by this microphone 11 to amplification processing and filter processing, and further to A/D conversion processing or the like, and then supplies the audio signal to the computation unit 15 as a digital audio signal.

The image capturing unit 12 image-captures the periphery (for example, the front side of the television device 2). The image capturing signal processing unit 14 subjects an image capturing signal obtained by an imager in the image capturing unit 12 to required processing, and then supplies the image capturing signal to the computation unit 15 as image data in units of frames.

Such a sensing apparatus 5 always (for example, while power supply is kept on or while the television device 2 is outputting) inputs an audio signal of ambient sounds and an image signal of a surrounding scene into the computation unit 15 continuously or intermittently.

The computation unit 15 includes, for example, an information measure device such as a microcomputer.

This computation unit 15 has functions as an input management unit 70, an analysis unit 80, and an output setting control unit 90. These functions are enabled by software that prescribes, for example, processing of a microcomputer or the like. Processing executed by the computation unit 15 on the basis of these functions will be described in detail below.

A memory unit 17 provides a work area required by the computation unit 15 to execute computation processing, and stores coefficients, data, tables, databases and the like used for the computation processing.

By using the above-described functions, the computation unit 15 makes output settings of the television device 2 in response to an input signal. Subsequently, the computation unit 15 notifies the television device 2 of the output settings through the communication interface 16, and causes the output settings to be executed in the television device 2.

The communication interface 16 is a component that communicates between the agent device 1 and the television device 2 through a wired or wireless transmission path.

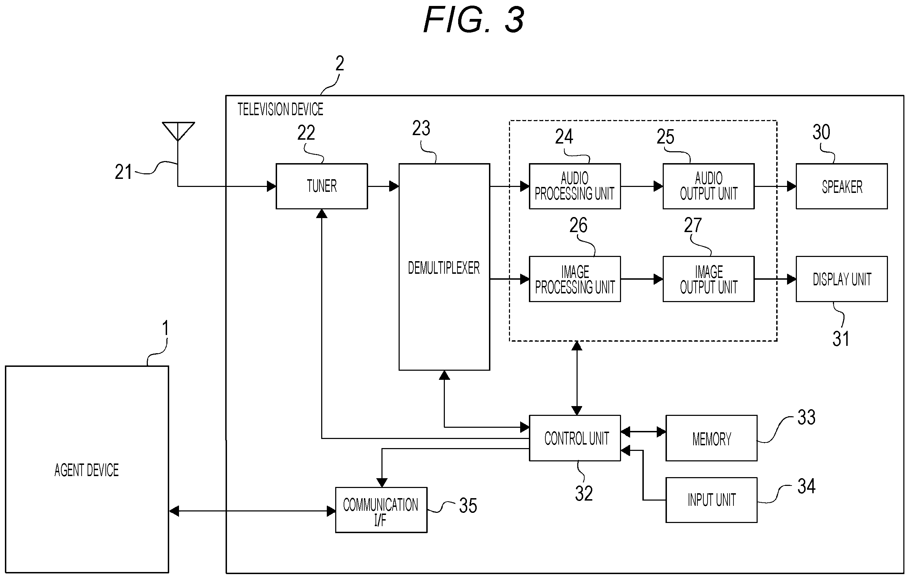

Fig. 3 shows a configuration of the television device 2.

In the television device 2, a tuner 22 receives and demodulates a broadcast wave received by an antenna 21, and supplies the demodulated signal to a demultiplexer 23.

The demultiplexer 23 supplies an audio data part of the demodulated signal to an audio processing unit 24, and supplies image data part to an image processing unit 26.

The audio processing unit 24 decodes audio data from the demodulated signal. In addition, the audio processing unit 24 subjects audio data obtained by decode processing to signal processing corresponding to various output settings. The signal processing to be performed includes, for example, sound volume level adjustment, low-frequency emphasis processing, high-frequency emphasis processing, equalizing processing, noise cancel processing, reverb processing, echo processing, and the like. The audio processing unit 24 supplies the audio output unit 25 with the audio data that has been subjected to the pieces of processing.

The audio output unit 25 subjects the supplied audio data to, for example, D/A conversion to obtain an analog audio signal, and subjects the analog audio signal to power-amplifier amplification processing or the like, and then supplies the analog audio signal to a speaker 30. Consequently, audio output of a received broadcast content (a program, etc.) is performed.

The image processing unit 26 decodes image data from the demodulated signal. In addition, the image processing unit 26 subjects image data obtained by decode processing to signal processing corresponding to various output settings. The signal processing to be performed includes, for example, brightness processing, color processing, sharpness adjustment processing, contrast adjustment processing, noise reduction processing, and the like. The image processing unit 26 supplies an image output unit 27 with the image data that has been subjected to the pieces of processing.

The image output unit 27 performs display driving of a display unit 31 by using, for example, the supplied image data. Consequently, the display unit 31 outputs images of the received broadcast content.

A control unit 32 includes, for example, a microcomputer or the like, and controls receiving operation and image and audio output operation in the television device 2.

An input unit 34 is, for example, an input unit for inputting user's operation, and includes a manipulator, or as a receiving unit of a remote controller.

On the basis of user operation information from the input unit 34, the control unit 32 performs receive settings of the tuner 22, operation control of the demultiplexer 23, setting control of audio processing in the audio processing unit 24, control of image output setting processing in the image processing unit 26 and the like.

The memory 33 stores information required by the control unit 32 to perform the control. For example, actual set values corresponding to various image settings and audio settings are stored in the memory 33 so as to be read by the control unit 32.

The control unit 32 is capable of communicating with the computation unit 15 of the agent device 1 through a communication interface 35 (and the communication interface 16 in Fig. 2). With this configuration, the control unit 32 can obtain information of image and audio output settings from the computation unit 15.

The control unit 32 controls signal processing of the audio processing unit 24, and signal processing of the image processing unit 26, according to the output settings received from the agent device 1, and consequently, image output and audio output based on the output settings set by the agent device 1 are realized in the television device 2.

Incidentally, in the configuration example of the television device 2 shown in Fig. 3, the broadcast wave is received by the antenna 21. However, needless to say, the television device 2 may support cable television, internet broadcasting or the like, or may be provided with, for example, an Internet browser function, or the like. Fig. 3 merely shows an example of the television device 2 that serves as an image and audio output apparatus.

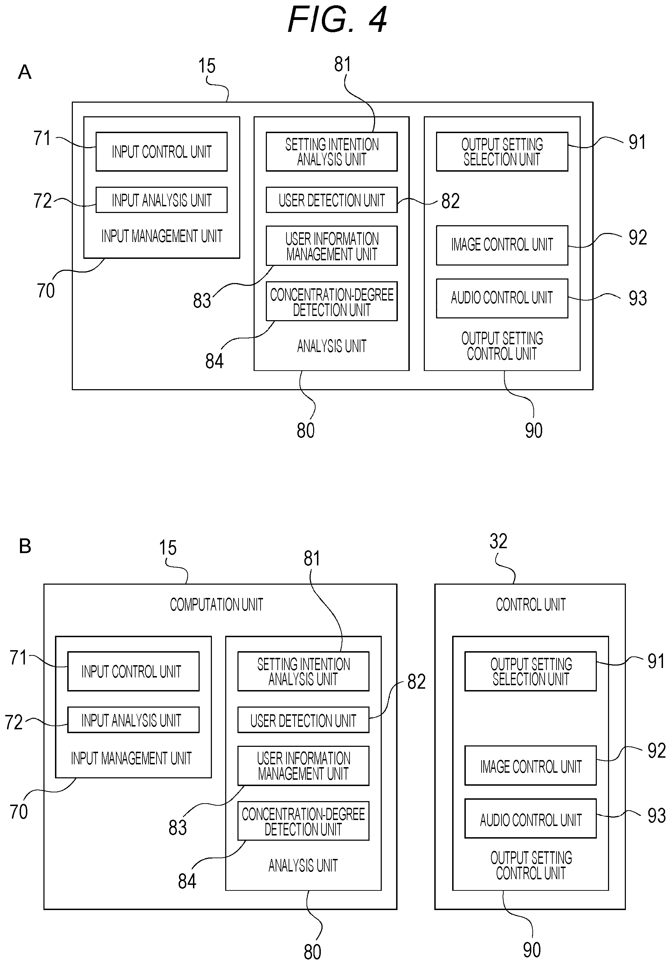

A functional configuration of the computation unit 15 in the agent device 1 of Fig. 2 will be described in Fig. 4A.

The computation unit 15 is provided with functions of an input management unit 70, an analysis unit 80, and an output setting control unit 90.

As shown in Fig. 4A, the input management unit 70 includes functions of an input control unit 71 and an input analysis unit 72.

The input control unit 71 manages input from devices of the sensing apparatus 5, the devices including, for example, the microphone 11, the image capturing unit 12, and the like. For example, the input control unit 71 receives an input signal, and temporarily stores the input signal.

The input analysis unit 72 performs processing of converting data such as an audio signal and an image signal obtained by the input control unit 71 into information available for the analysis unit 80.

The analysis unit 80 performs processing of analyzing information of a user who exists in front of the television device 2, and a voice instruction of the user, on the basis of information from the input management unit 70.

Therefore, the analysis unit 80 has functions as a setting intention analysis unit 81, a user detection unit 82, a user information management unit 83, and a concentration-degree detection unit 84.

The setting intention analysis unit 81 performs processing of analyzing a user's intention of output settings related to an image and a sound by analyzing audio input information.

Specifically, a user's utterance related to output settings (terms related to image and audio output settings) is understood by voice recognition so as to allow the settings to be changed according to the user's intention.

For example, an utterance of "I would like to increase sharpness more" is understood as user's words requesting to change sharpness settings. For this purpose, for example, the memory unit 17 is configured to store a wide variety of words related to various output settings in such a manner that a user's intention can be correctly understood by checking. Specifically, a table that stores many words each expressing one setting operation is provided in such a manner that a wide variety of words can be recognized as words that each instruct sound volume down, the words including, for example, "noisy", "loud", "boisterous", "volume down", and the like. The setting intention analysis unit 81 checks the user's utterance against these tables to determine the user's intention.

The user detection unit 82 analyzes sensing information obtained by the image capturing unit 12, and performs processing of identifying a user who exists in front of the television device 2. The user identification may be personal identification, or may be, for example, identification by user's attributes like age-group discrimination.

For example, if a system is used at home, it is considered that each family member is identified.

The user information management unit 83 manages user's preference information, content payment information, an interest degree of a content, and the like, which are obtained from cooperative apparatuses.

For example, if information related to a viewing history and an operation history of each user is accumulated in the memory unit 17, information such as user's preference can be estimated from the history information. In addition, user's individual information may be obtained from, for example, a server through a transmission path such as the Internet.

Alternatively, it can also be considered that information related to general hobbies and diversions based on various user attributes is obtained from a database or an external server. The information to be obtained includes, for example, information indicating that a low-age group has a preference like this.

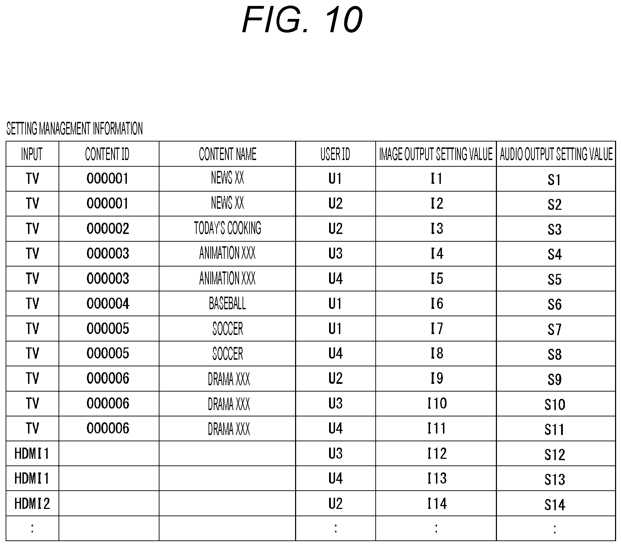

The embodiment assumes that the user information management unit 83 generates and updates setting management information in Fig. 10 described below by using these pieces of user information.

The concentration-degree detection unit 84 performs processing of calculating a user's concentration degree on the content on the basis of line-of-sight information obtained from a captured image captured by the image capturing unit 12.

The output setting control unit 90 makes output settings, which are settings related to image output or audio output, by using an analysis result of the analysis by the analysis unit 80, by using at least user identification information obtained as a result of the user identification. Therefore, the output setting control unit 90 is provided with functions as an output setting selection unit 91, an image control unit 92, and an audio control unit 93.

The output setting selection unit 91 performs processing of determining, on the basis of information obtained from the analysis unit 80, how to control image and audio output settings.

The image control unit 92 controls image quality. Specifically, the image control unit 92 performs processing of transmitting information of image-related output settings to the control unit 32 of the television device 2. It should be noted that the image control unit 92 may be adapted to directly control processing related to output settings of the image processing unit 26.

The audio control unit 93 controls a sound volume and a sound quality. Specifically, the audio control unit 93 performs processing of transmitting information of audio-related output settings to the control unit 32 of the television device 2. It should be noted that the audio control unit 93 may be adapted to directly control processing related to output settings of the audio processing unit 24.

In the present embodiment, the computation unit 15 is provided with the above-described functions, and by switching image and audio output settings in the television device 2 on a user basis in response to a situation, video and audio that are more suitable for a user who is viewing a program are output.

It should be noted that Fig. 4B shows a modified example. This Fig. 4B shows a state in which the input management unit 70 and the analysis unit 80 are provided in the computation unit 15 in the agent device 1, and the output setting control unit 90 is provided in the control unit 32 of the television device 2.

In this case, an analysis result of the analysis by the analysis unit 80 is supplied to the control unit 32, and the control unit 32 causes the output setting control unit 90 to make output settings in response to the analysis result.

For example, the function may be shared between the computation unit 15 and the control unit 32 in this manner.

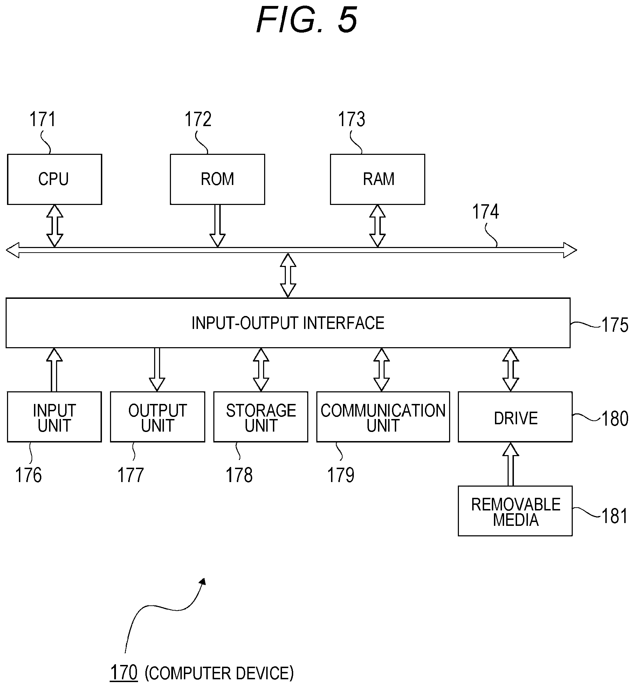

As a hardware configuration, the above-described agent device 1 provided with the function realized by software as shown in Figs. 4A and 4B can realized by, for example, a computer device 170 as shown in Fig. 5.

In Fig. 5, a central processing unit (CPU) 171 of the computer device 170 executes various kinds of processing according to a program stored in a read only memory (ROM) 172 or a program loaded into a random access memory (RAM) 173 from a storage unit 178. In addition, data or the like that the CPU 171 requires in executing the various kinds of processing is also stored in the RAM 173 as appropriate.

The CPU 171, the ROM 172, and the RAM 173 are interconnected through a bus 174. In addition, an input-output interface 175 is also connected to this bus 174.

The sensing apparatus 5, or an input unit 176 that includes a manipulator and an operation device, is connected to the input-output interface 175.

In addition, there can also be considered a case where a display that includes a liquid crystal display (LCD), an organic electro-luminescence (EL) panel, or the like, and an output unit 177 that includes a speaker or the like, are connected to the input-output interface 175.

There is also a case where a storage unit 178 including a hard disk or the like, and a communication unit 179 including a modem or the like, are connected to the input-output interface 175.

The communication unit 179 performs communication processing through the transmission path such as the Internet, which is indicated as the network 3, and communicates with the television device 2 by means of wired/wireless communication, bus communication, or the like.

In addition, a drive 180 is connected to the input-output interface 175 as necessary, a removable media 181 such as a magnetic disk, an optical disk, a magneto-optical disk, or a semiconductor memory is mounted thereto as appropriate, and a computer program read therefrom is installed in the storage unit 178 as necessary.

In a case where a function of the above-described computation unit 15 is executed by software, a program that configures the software can be adapted to be installed from a network or a recording medium.

This recording medium includes the removable media 181 including a magnetic disk, an optical disk, a magneto-optical disk, a semiconductor memory, or the like, the removable media 181 having a program recorded thereon, and being distributed so as to deliver the program to a user. Alternatively, the recording medium also includes, for example, the ROM 172 in which a program is recorded, or a hard disk included in the storage unit 178, the program being delivered to a user with the program built into the device body beforehand.

In a case where such a computer device 170 is used as the agent device 1, the computer device 170 inputs information of the sensing apparatus 5 serving as the input device 176, and the CPU 171 functions as the computation unit 15, and is capable of performing operation of transmitting output setting information to the control unit 32 of the television device 2 through the communication unit 179.

<3. Second configuration example: Agent device that is built into output apparatus>

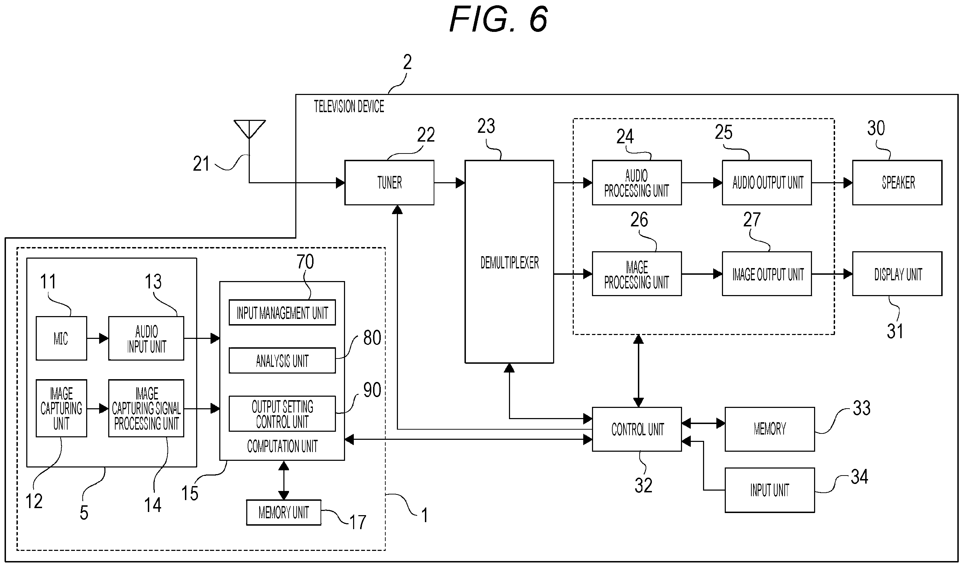

Fig. 6 shows a second configuration example used in a case where the agent device 1 is built into the television device 2 as shown in Fig. 1B.

It should be noted that although Fig. 1B illustrates the sensing apparatus 5 that is separately provided, Fig. 6 shows an example in which the sensing apparatus 5 is also built into the television device 2. Identical reference numerals are used to denote identical components, and are shared between Figs. 2 and 3 so as to avoid repeated explanation of the same components.

As shown in Fig. 6, the configuration described above as the agent device 1 is provided in the television device 2. The control unit 32 and the computation unit 15 are communicatable therebetween through, for example, an internal bus or the like, and exchange output setting information and the like.

In this manner, the agent device 1 can be built into the television device 2 as an internal device thereof. In addition, this configuration also enables switching of image and audio output settings in the television device 2 on a user basis in response to a situation.

<4. Third and fourth configuration examples: Configuration that uses external analytical engine>

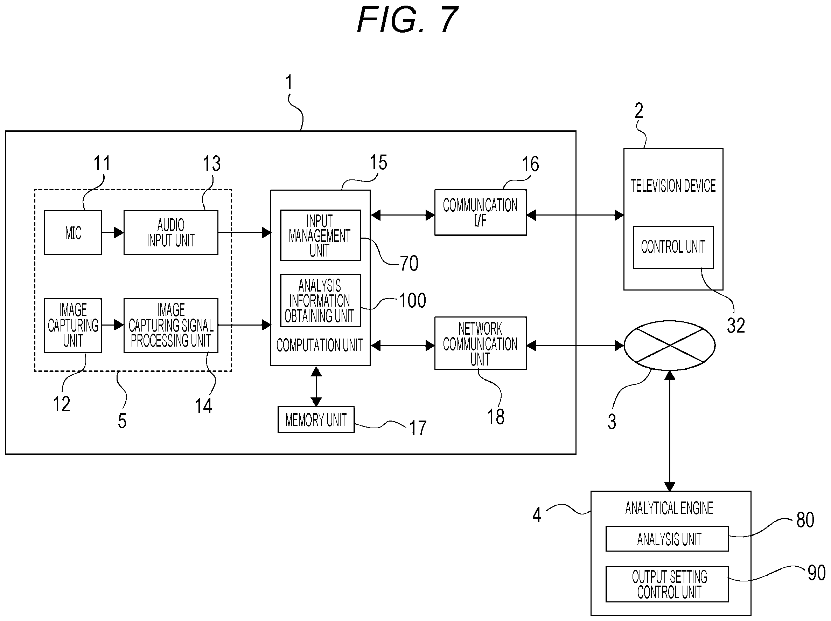

Fig. 7 shows a third configuration example corresponding to Fig. 1C.

This is an example in which the agent device 1 is capable of communicating with the analytical engine 4 through the network 3.

The computation unit 15 of the agent device 1 is provided with the input management unit 70, and an analysis information obtaining unit 100.

In addition, the analysis unit 80 and the output setting control unit 90 are provided on the analytical engine 4 side.

Further, the agent device 1 is provided with a network communication unit 18 for communication through the network 3.

In this case, as processing of the computation unit 15, the analysis information obtaining unit 100 transmits analysis data obtained by the input management unit 70 to the analytical engine 4 through the network 3 by using the network communication unit 18.

In the analytical engine 4, the analysis unit 80 performs required analysis processing, and the output setting control unit 90 makes output settings by using a result of the analysis processing. Subsequently, output setting information is transmitted to the agent device 1.

The analysis information obtaining unit 100 obtains the output setting information transmitted from the analytical engine 4, and causes the communication interface 16 to transmit the output setting information to the control unit 32 of the television device 2.

As with the preceding first and second configuration examples, such a configuration enables switching of image and audio output settings in the television device 2 on a user basis in response to a situation.

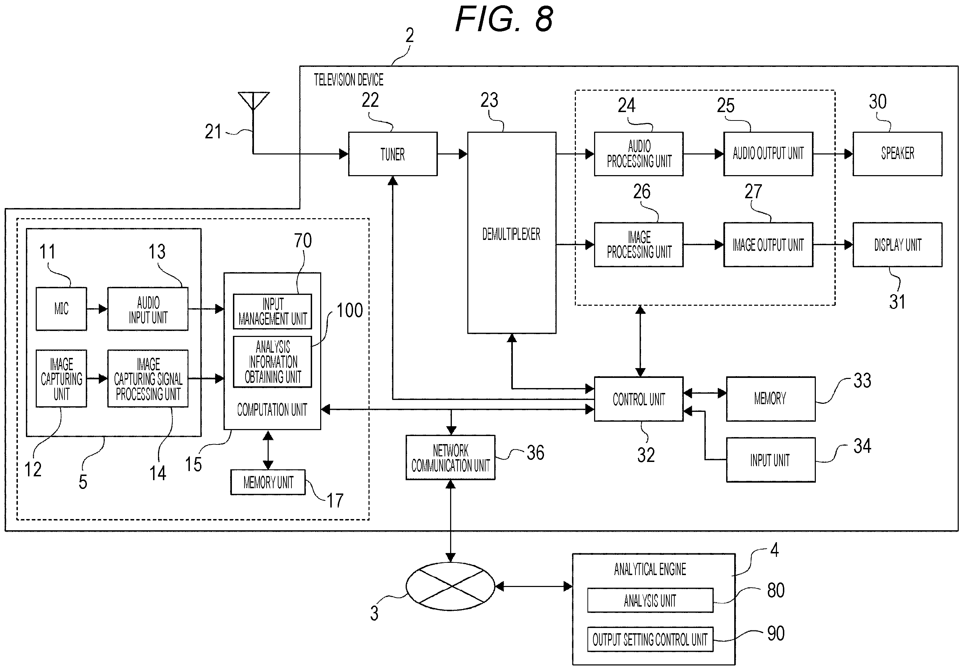

Fig. 8 shows a fourth configuration example corresponding to Fig. 1D.

In this configuration example, a network communication unit 36 is added to the preceding configuration in Fig. 6.

In addition, as with Fig. 7, the computation unit 15 of the agent device 1 is provided with the input management unit 70 and the analysis information obtaining unit 100, and the analysis unit 80 and the output setting control unit 90 are provided on the analytical engine 4 side.

In this case, as processing of the computation unit 15, the analysis information obtaining unit 100 transmits analysis data obtained by the input management unit 70 to the analytical engine 4 through the network 3 by using the network communication unit 36.

In the analytical engine 4, the analysis unit 80 performs required analysis processing, and the output setting control unit 90 makes output settings by using a result of the analysis processing. Subsequently, output setting information is transmitted to the agent device 1.

The analysis information obtaining unit 100 obtains the output setting information transmitted from the analytical engine 4, and transmits the output setting information to the control unit 32 by using communication through an internal bus or the like.

As with the preceding first and second configuration examples, such a configuration enables switching of image and audio output settings in the television device 2 on a user basis in response to a situation.

<5. Processing according to first embodiment: Settings made in response to situation>

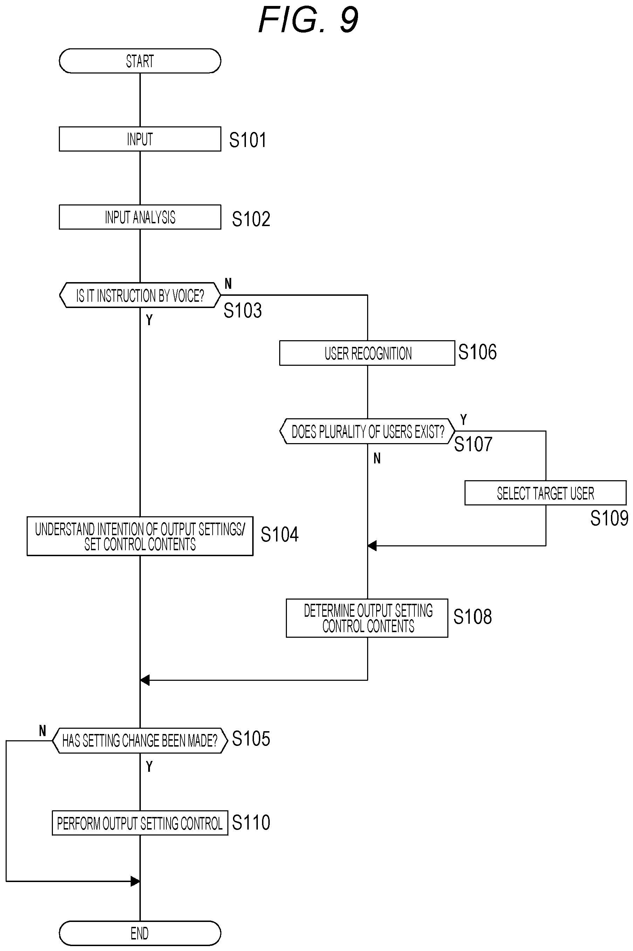

As specific processing examples of processing executed in the various configuration examples described above, processing according to the first embodiment will be described in Figs. 9, 10, and 11.

Fig. 9 shows a processing example in which output settings of the television device 2 are made in response to a detected situation. This Fig. 9 shows, for example, processing executed by the computation unit 15 using each function described above in the first or second configuration example.

In addition, the computation unit 15 repeatedly executes steps from the start to the end in Fig. 9. For example, it is considered that during a time period during which image/audio output is performed in the television device 2, the computation unit 15 continuously performs processing in Fig. 9. However, in order to reduce a processing load, for example, the processing in Fig. 9 may be intermittently executed at intervals of a predetermined time period.

In step S101, the computation unit 15 accepts an input from the sensing apparatus 5 by using the function of the input control unit 71.

In step S102, by using the function of the input analysis unit 72, the computation unit 15 performs processing of analyzing accepted audio and image signals so as to bring the signals into a state in which the analysis unit 80 can handle the audio and image signals.

In step S103, depending on whether or not the input is a voice operation instruction, the computation unit 15 causes the process to branch.

However, in actuality, in step S103, the computation unit 15 has only to determine whether or not an audio input has been made as a user's utterance. This is because whether or not the input is an operation instruction is determined in step S104.

In addition, the audio input mentioned in this case means, for example, only an uttered voice of a user who is viewing a program. An output sound of the television device 2 is also naturally collected depending on the microphone 11. However, such a sound is excluded from the detection.

For example, the input control unit 71 of the computation unit 15 is adapted to input an audio signal output from the speaker 30 of the television device 2 so as to exclude a sound similar to the output audio from a detection target. Alternatively, it can also be considered that user's voices are learned, and the input control unit 71 is adapted to perform voice discrimination so as to determine an input of a user's voice.

In a case where a user's operation instruction with a voice has been detected, the process proceeds from step S103 to step S104, and the computation unit 15 understands setting contents required by the user by using the function of the setting intention analysis unit 81. Subsequently, control contents of output settings that should be changed in response thereto are identified.

In other words, what the user's utterance requires is first understood by analyzing the input voice, and the following words and contents of user's intentions are assumed.

"I would like to increase sharpness more" ... Increase a level of sharpness settings
"Noises appear in an image" ... Subject the image to noise reduction
"Eyes got tired" ... Decrease brightness
"A high frequency sound is emphasized" ... Adjust an audio equalizer, attenuate the high frequency sound
"Loud" ... Turn a sound volume down

As described above, the computation unit 15 refers to a database or the like in which user's words are associated with contents of output settings, and understands what kind of output setting change the contents of the uttered and input voice require.

Subsequently, the computation unit 15 determines control contents that cause the output settings to be changed on the basis of the required contents. For example, for the utterance of "loud", the computation unit 15 understands control contents instructing to turn a sound volume down, and selects an actual output setting value corresponding to the control contents. For example, the computation unit 15 generates a sound-volume-level setting value, the sound volume level of which is decreased by one.

In addition, for example, for the utterance of "I would like to increase sharpness more", the computation unit 15 understands control contents instructing to increase a level of sharpness settings, and generates a sharpness setting value that increases a sharpness level.

It should be noted that needless to say, there is a case where an audio input that is not an instruction is also detected, and therefore not all of user's uttered voices are operation instructions. In particular, in a case where uttered words do not correspond to output settings, the computation unit 15 has only to determine, in step S104, that control is not required.

In step S105, whether or not a setting change has been made is checked. In particular, in a case where it is determined that an output setting change is not required in this timing (in a case where it has been determined, in step S104, that control is not required), the process in Fig. 9 is ended as it is, and the process is started again from step S101. Alternatively, the process is started from step S101 after a lapse of a predetermined time period.

In step S105, in a case where it is determined to make an output setting change (in a case where some kind of control contents (output setting value) have been determined in step S104), the process proceeds to step S110, and the computation unit 15 performs output setting control corresponding to the control contents by using the function of the output setting selection unit 91.

As described above, when the audio output setting value and the image output setting value have been generated in step S104, in response to the generation, the computation unit 15 transmits the output setting values to the control unit 32 of the television device 2 by using the functions of the image control unit 92 and the audio control unit 93. Consequently, the control unit 32 performs the control in such a manner that output settings in the audio processing unit 24 and the image processing unit 26 are changed to a state desired by the user.

In a case where no voice is input, the process proceeds from step S103 to step S106. In this case, the computation unit 15 performs user recognition by using the function of the user detection unit 82. In other words, a user who exists in front of the television device 2 is recognized from a captured image obtained by the image capturing device 3. With respect to the user recognition performed in this case, for example, each individual may be identified so as to associate each user with identification information, or an age group may be determined.

In step S107, as the result of user recognition, a determination is made as to whether or not a plurality of users exists in front of the television device 2.

In a case where the number of users is one, the process proceeds to step S108, and the computation unit 15 determines control contents of output settings corresponding to the recognized user by using the function of the user information management unit 83.

Needless to say, there is also a case where the control is not required. Here, it is assumed that in a case where a different user has been detected, or in a case where a content (a program that is being broadcasted) has been changed, output settings are changed in response to the situation.

If not applicable to these, it is determined that the control is not required, the process then proceeds to step S105, and the process ends.

Meanwhile, in a case where control is performed to change output settings, the computation unit 15 determines control contents in step S108, the process then proceeds from step S105 to step S110, and the computation unit 15 selects settings corresponding to the control contents by using the function of the output setting selection unit 91. Subsequently, the computation unit 15 transmits the selected output setting values to the control unit 32 of the television device 2 by using the functions of the image control unit 92 and the audio control unit 93. Consequently, by the control of the control unit 32, output settings in the audio processing unit 24 and the image processing unit 26 are changed to a state suitable for the detected user.

A specific example of processing in step S108 performed in this case will be described. The computation unit 15 refers to, for example, setting management information in Fig. 10 to identify control contents.

The setting management information is a table that stores an image output setting value Ii, and an audio output setting value Si in combinations of an input source of a content, a content ID, a content name, and a user ID (U1, U2, ...). (i = 1, 2, 3 ...)

The image output setting value Ii represents a combination of image settings.

For example, Ii has contents as follows:
[Brightness: Ia, Sharpness: Ib, Luminosity: Ic, Contrast: Id, Color temperature: Ie, ...], which indicates that each setting value is stored corresponding to a combination of a content and a user.

The audio output setting value Si represents a combination of audio settings.

For example, Si has contents as follows: [Sound volume: Sa, High-frequency gain: Sb, Low-frequency gain: Sc, Noise cancellation: Sd, Reverb: Se, ...], which indicates that each setting value is stored corresponding to a combination of a content and a user.

For example, in this Fig. 10, U1 to U4 are stored as user IDs, and it is assumed that these user IDs are set for four individual family members.

For example, in a case where users U1 and U2 are assumed to be a father and a mother, image output setting values I1 and I2 and audio output setting values S1 and S2 used when each of the users U1 and U2 views a news XX having a content ID of 000001 are stored. In other words, output setting values are registered for each combination of an individual and a content.

For example, when the computation unit 15 recognizes a user in step S106, the computation unit 15 identifies a user ID of the user. Subsequently, in step S108, the computation unit 15 refers to setting management information by using the user ID and information of a content that is being currently output, the information having been obtained from the control unit 32, and reads the image output setting value Ii and the audio output setting value Si in a current combination.

In a case where these setting values differ from output settings that are currently being executed on the television device 2 side, the computation unit 15 uses, as new setting values, the image output setting value Ii and the audio output setting value Si that have been read, thereby determining control contents, and performs output setting control in step S110.

Needless to say, if the image output setting value Ii and the audio output setting value Si that have been read from the setting management information are the same as the current output settings, control is not required, and therefore the computation unit 15 has only to end the process from step S105.

Incidentally, as shown in Fig. 10, the output setting values may be held on a content basis, and on an input (TV, HDMI1, HDMI2, ...) basis, or setting values may be held, for example, on a genre basis, or on a scene basis based on scene detection (note that HDMI is registered trademark).

In addition, in some cases, there is also a case where output setting values corresponding to a combination of a content and a user are not registered. In this case, preset may be used, or recommended output setting values may be used by obtaining, on the basis of the age and preference information of a user, the recommended output setting values from setting information shared on a cloud.

In a case where it has been determined that the number of users is plural in step S107, the process proceeds to step S109, and the computation unit 15 selects a target user among the plurality of users.

Subsequently, in step S108, the computation unit 15 determines control contents corresponding to a combination of the target user and a content, and the computation unit 15 similarly performs output setting control if necessary.

In this case, in step S109, how to determine a target user can be considered variously, and a specific example thereof will be described later as a second embodiment.

In addition, more simply, for example, in a case where one user has been initially determined at random, it is considered that the user is continuously regarded as a target user so long as the user exists. In a case where the target user disappears from the front of the television device 2 and the other plurality of users still exist there, a target user is determined among them at random.

Incidentally, it is considered that the setting management information as shown in Fig. 10 is generated by the computation unit 15 (the user information management unit 83) on the basis of attribute information of each user and information obtained using the attribute information. Alternatively, the computation unit 15 (the user information management unit 83) may obtain this setting management information from a predetermined information server through the network. In particular, in a case where attributes, tastes, and the like of each user are determined, for example, output setting values can also be changed according thereto.

In addition, it is preferable that the computation unit 15 (the user information management unit 83) successively update the setting management information according to an operation history and a content viewing history of a user.

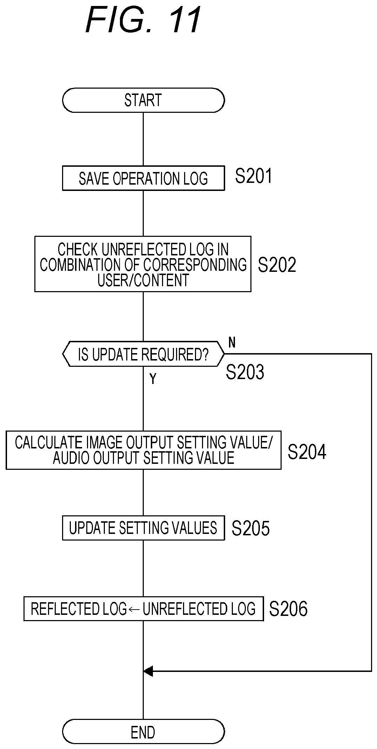

For example, the computation unit 15 is adapted to perform processing in Fig. 11 every time the user performs operation related to output settings.

For example, in a case where an operation by an utterance, or an operation from the input unit 34 of the television device 2 using a remote controller or the like has been made, the computation unit 15 saves an operation log thereof in step S201. In this case, for example, a user who has performed the operation by using the function of the user detection unit 82 is determined, and at least a user ID, a content ID, and an output setting value that has been changed by the operation are stored. Needless to say, it is preferable to store a content name and an input source as well.

In step S202, an operation log that has not yet been reflected in the setting management information is checked in the same user/content combination as that of the operation log saved this time. For example, it is checked whether or not the number of unreflected operation logs that exist in the combination is a predetermined number or more.

Subsequently, in step S203, the computation unit 15 determines whether or not to update the setting management information in response to a situation of the unreflected operation log.

For example, in a case where the number of unreflected operation logs that exist in the same combination is a predetermined number or more, this enables estimation of a tendency of output settings for the content made by the user. In such a case, the process proceeds to step S204, and the computation unit 15 calculates the image output setting value Ii and the audio output setting value Si by using the unreflected operation log.

Subsequently, in a case where a registration has already been made in the setting management information in a combination of the user and the content, whether or not a change is required is calculated from a situation of recent operation logs by using also the image output setting value Ii and the audio output setting value Si that have been registered.

Meanwhile, in a case where the combination of the user and the content is an unregistered combination, the image output setting value Ii and the audio output setting value Si that will be desired by the user at the time of viewing the content are calculated from an unreflected operation log.

In step S205, the computation unit 15 registers, in the setting management information, the image output setting value Ii and the audio output setting value Si that have been calculated. Therefore, if a registration has already been made in the combination of the user and the content, there is a case where the image output setting value Ii and the audio output setting value Si are updated. In addition, if no registration has been made in the combination, the image output setting value Ii and the audio output setting value Si will be newly registered.

In step S206, the computation unit 15 manages, as a reflected log, the operation log that has been used this time, and prevents this operation log from being used as an unreflected log next time.

By performing such processing, output settings corresponding to a combination of each content and each user are registered/updated in the setting management information according to the use of each user. Consequently, as the use progresses, the accuracy with which appropriate output settings are made for the user in the processing in Fig. 9 will increase.

It should be noted that although Fig. 10 shows the example in which output setting values are tabled in combination with each content on an individual basis, the output setting values may be managed in a combination of each user attribute and each content.

For example, the image output setting value Ii and the audio output setting value Si are stored in a combination of attributes such as an age group (distinction among, for example, children at the age of 10 years old or younger, 11 to 20 years old persons, 21 to 60 years old persons, and persons at the age of 61 years old or more) and distinction of sex, and each content (or for each genre of content). In this case, output setting values that are general to some extent in each combination are prepared beforehand, and are stored in, for example, the memory unit 17, or are allowed to be obtained through the network 3.

Subsequently, in step S108 in Fig. 9, such output setting values may be obtained on the basis of user identification information (attribute identification information).

Even in a case where setting management information is data that supports user attributes, by making an update by the processing as described in Fig. 11 according to an operation history of a user belonging to a corresponding age group in each family, setting values suitable for each user can also be adapted to be learned.

<6. Processing according to second embodiment: Multiuser support I>

As the second embodiment, an example of a case where a plurality of users exists will be described. This is a more effective example as step S109 in the processing of Fig. 9 described above.

First of all, as a way of thinking of target user selection applied in a case where a plurality of users exists, examples of [A1] to [A5] are mentioned.

[A1] Target user selection based on program genre/viewing age

A user is identified by facial recognition from a captured image captured by the image capturing unit 12, and most suitable and favorite output settings for the user are generated corresponding to a program genre and a viewing age.

It is considered that output setting values corresponding to the viewing age and the program genre are held as presets beforehand. For example, in the case of a program for children, children's favorite settings are made. In a case where an elderly person is viewing a program, for example, the size of subtitles is made large and the sound volume is turned up.

Needless to say, in a case where a user is identified, output setting values may be obtained by referring to the above-described setting management information (Fig. 10).

[A2] Target user selection based on concentration degree

The time period during which a line-of-sight falls within a definite range is measured on a user basis, a concentration degree of viewing is measured so as to select, as a target user, a user having a high concentration degree, and favorite output settings for the target user are generated.

If there is a person who has fallen asleep in the middle of viewing, priority is given to a person who is awake.

In addition, target user selection can also be configured, for example, in such a manner that priority is not given to a person who is viewing a program while operating a smartphone or the like.

It can also be considered that information of a person who is sleeping, or information of a person who is operating a smartphone, is obtained from a wearable device, a smartphone, or the like that is a cooperative apparatus.

[A3] Target user selection based on concentration degree and interest degree

Favorite output settings for a user having a high concentration degree based on a line-of-sight, and having a high interest degree calculated by a viewing history on a user basis, are generated.

For example, in a situation in which a plurality of users is viewing, an interest degree of each user is calculated, a person who has a high interest degree is selected as a target user, and favorite output settings for the person are generated. For example, output setting values are obtained by referring to the setting management information.

For example, in the case of a sports program viewed by the father every day, processing is configured in such a manner that output settings in which priority is given to the father are generated.

An interest degree (R) on a program basis used in this case is defined, for example, as described below.

First of all, the following X1, X2, X3, and X4 are determined as information (concentration degree) that can be obtained from a captured image.

X1: a time period during which a user exists in front of the television device 2 while the program is being viewed (in a case where a commercial message can be detected by a recorded content, a time zone thereof is excluded; the same applies hereinafter)

X2: a time period during which a facial direction of a user is directed toward the television device 2 while the program is being viewed

X3: a time period during which a line-of-sight of a user is directed to a direction of the television device 2 while the program is being viewed (the line-of-sight falls within a certain definite range)

X4: an exponent of feelings obtained from expression of a user who is viewing a program the program (example: a level of a smile degree; as the length of a time period during which the user is smiling increases, the exponent becomes higher)

In addition, the following Y1, Y2, and Y3 are determined as information obtained from a viewing history.

Y1: a ratio of continuous viewing after the first viewing of the same program (for example, in a case where a weekly program that has started from April is viewed from July, and is regularly viewed every week, the ratio is converted into 100%, and thus the ratio is converted on the basis of continuity from the first viewing)

Y2: whether or not the program has been recorded

Y3: the number of times the program has been reproduced in a case where the program has been recorded

By using the above-described numerical values, an interest degree R is calculated by a function f that calculates an interest degree.

$$\text{Interest degree R} = f(X1, X2, X3, X4, Y1, Y2, Y3)$$

It should be noted that besides the above, user's preference information (a favorite actor, a favorite voice actor, a favorite program, a favorite genre, etc.) obtained from a cooperative apparatus, and program information (performer information, etc.) may be used.

In addition, although an element of the concentration degree is added to the interest degree R here, it can also be considered that a target user is selected by using only the interest degree. There is provided an example in which the interest degree is calculated by using, for example, the above-described Y1, Y2, and Y3 as follows: Interest degree R = f(Y1, Y2, Y3).

[A4] Target user selection based on content purchaser

According to facial recognition and user's payment information, a content purchaser is selected as a target user, and favorite output settings for the target user are generated.

[A5] Target user selection based on distance to screen

A distance from a screen of each user is measured, a user who is close to the screen is selected as a target user, and favorite output settings for the target user are generated.

For example, the techniques of selecting a target user as those described in [A1] to [A5] can be considered. As the second embodiment, for example, in a case where a plurality of users is detected in front of the television device 2, a target user is selected by using these techniques, and output settings corresponding to the target user and the content are made.

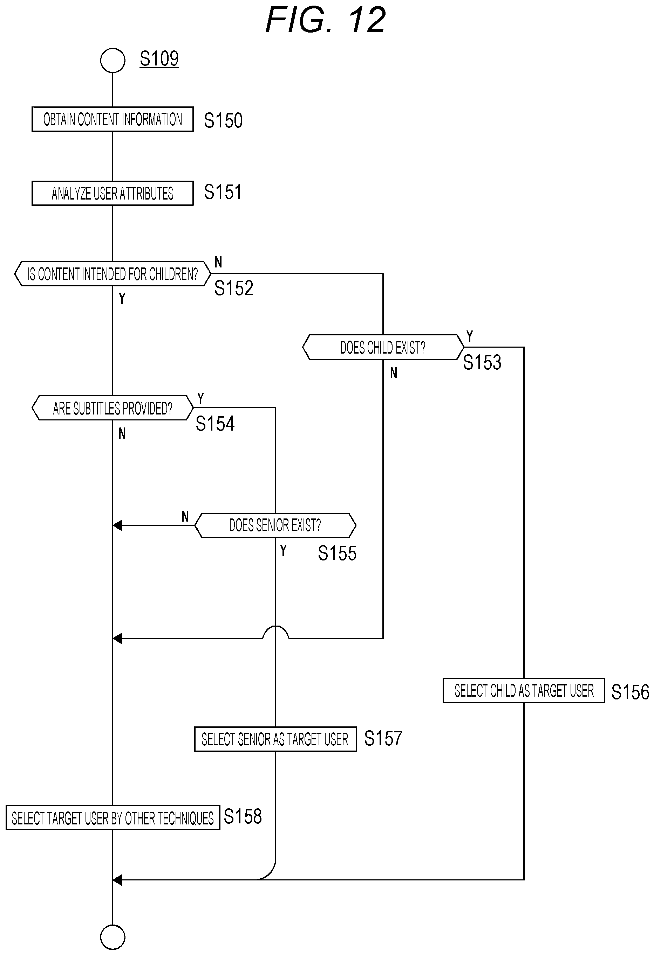

Fig. 12 shows a processing example that uses the above-described [A1]. Fig. 12 details step S109 in Fig. 9.

In a case where the process proceeds to step S109 in Fig. 9 as a result of the detection of a plurality of users, the computation unit 15 obtains content information as step S150 in Fig. 12. In other words, first of all, information related to a content (a program, etc.) that is currently being viewed is checked. For example, a genre, presence/absence of subtitles, or the like.

In addition, in step S151, the computation unit 15 analyzes user attributes. In this case, each of a plurality of users is checked for, for example, an age group.

In step S152, depending on whether or not the content is intended for children, the computation unit 15 causes the process to branch. In the case of the content intended for children, in step S153, a check is made as to whether or not a child exists among viewers, and in a case where a child exists, in step S156, the child is selected as a target user.

Subsequently, step S109 ends, and the process proceeds to steps S108, S105, and S110 in Fig. 9.

It should be noted that in a case where the number of children is one, this child is selected as a target user, and the image output setting value Ii and the audio output setting value Si are only required to be obtained by referring to the setting management information in Fig. 10.

In a case where the number of children is plural, it can also be considered that a child having the highest concentration is identified among the children by using, for example, the technique [A2] described above, and the child is selected as a target user. Needless to say, a target user may be selected by using the technique [A3] or [A5].

In addition, whether or not one or more children exist may be determined without identifying each individual. In this case, the setting management information as shown in Fig. 10 is provided (or an information request is given to an external device or a network) in a combination of a content and a general child. This enables obtaining the image output setting value Ii and the audio output setting value Si that are suitable for children, and performing output setting control.

In a case where a content that is being viewed is not a content intended for children, the process proceeds from step S152 to step S154 in Fig. 12, and the computation unit 15 determines presence/absence of subtitles. Alternatively, the computation unit 15 may determine whether or not contents of the content belong to a genre intended for aged people.

In a case where subtitles are provided, the process proceeds to step S155, and the computation unit 15 checks whether or not a senior exists among viewers.

In a case where a senior exists, this senior is selected as a target user in step S157.

Subsequently, step S109 ends, and the process proceeds to steps S108, S105, and S110 in Fig. 9.

In this case as well, in a case where the number of seniors is one, the image output setting value Ii and the audio output setting value Si are only required to be obtained by referring to the setting management information in Fig. 10 in a combination of this person and the content.

In a case where the number of seniors is plural, it can also be considered that one senior who is a main viewer is selected as a target user by using any of the techniques [A2] to [A5] described above.

In addition, whether or not one or more seniors exist is determined without identifying each individual, and the image output setting value Ii and the audio output setting value Si are only required to be obtained in a combination of the content and a senior.

In a case where it has been determined, in step S154, that subtitles are not provided, in a case where it has been determined, in step S153, that no child exists, or in a case where it has been determined, in step S155, that no senior exists, the computation unit 15 selects a target user by using other techniques in step S158. For example, a target user may be selected at random, or may be selected by using any of the techniques [A2] to [A5].

By the processing in Fig. 12 described above, even in a case where plural viewers exist, in the case of a content intended for children when the viewers include a child, or in the case of a content intended to be viewed by seniors when the viewers include a senior, output setting control that gives priority to those persons is performed.

A viewing environment having output settings that are suitable for children or aged people, who do not often perform particular fine setting operation, can be provided.

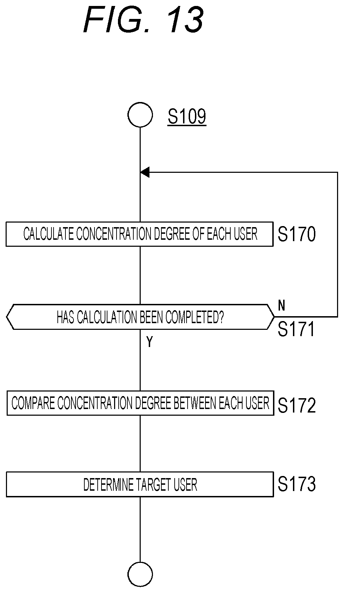

Fig. 13 shows a processing example that uses the above-described [A2]. This Fig. 13 also details step S109 in Fig. 9.

In a case where the process proceeds to step S109 in Fig. 9 as a result of the detection of a plurality of users, the computation unit 15 calculates a concentration degree of each user as step S170 in Fig. 13. For example, the computation unit 15 detects a line-of-sight direction and a facial direction during a fixed time period, whether or not eyes are closed, an operation situation of other apparatuses such as a smartphone, or the like, and calculates a concentration degree of each person.

After the calculation is completed, the process proceeds from step S171 to step S172, and the computation unit 15 compares a concentration degree of each user. Subsequently, in step S173, the computation unit 15 determines, as a target user, for example, a user having the highest concentration degree.

After that, the computation unit 15 causes the process to proceed to step S108 in Fig. 9.

Output settings that are fitted to a person who is concentrating on viewing are made by this processing, a setting function of the television device 2 is exhibited in an effective state.

It should be noted that in a case where plural persons each having a high concentration degree exist, a target user may be selected by using interest degrees or the like of those persons.

Alternatively, in a case where persons each having a high concentration degree belong to the same age group, it can also be considered that the image output setting value Ii and the audio output setting value Si corresponding to a combination of this age group and a content are obtained.

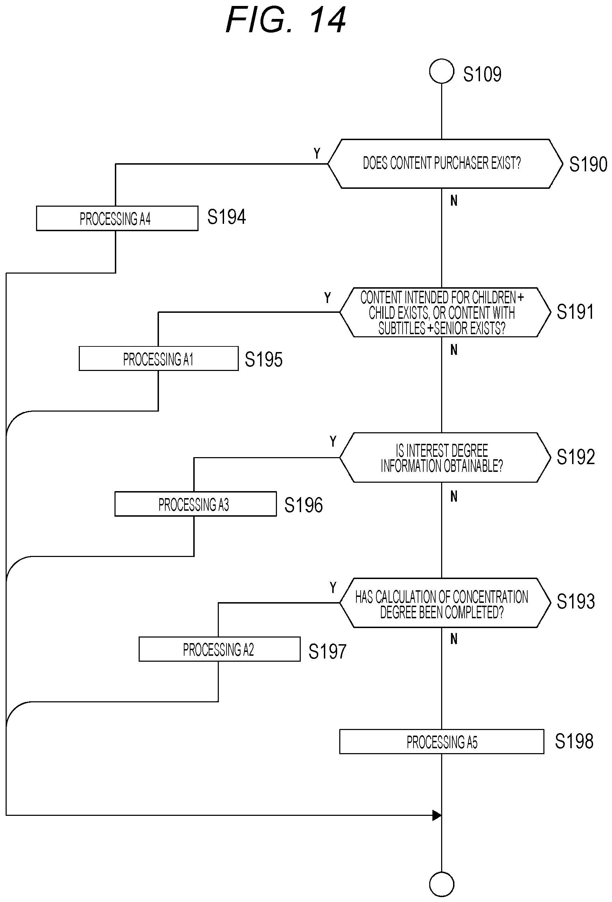

Fig. 14 shows an example in which the above-described [A1] to [A5] are prioritized, and are then combined. This Fig. 14 also details step S109 in Fig. 9.

In a case where the process proceeds to step S109 in Fig. 9 as a result of the detection of a plurality of users, first of all, the computation unit 15 discriminates whether or not a content purchaser exists among viewers as step S190 in Fig. 14. It should be noted that for this purpose, it is preferable to perform facial recognition beforehand, for example, on an individual family member basis. In addition, it is considered that information of a content purchaser is obtained from, for example, the content server side.

In a case where a content purchaser exists among the viewers, the process proceeds to step S194, and the computation unit 15 performs the processing [A4], in other words, selects the content purchaser as a target user.

In a case where a content purchaser does not exist, the computation unit 15 proceeds to step S191. In this case, the computation unit 15 determines a condition of whether or not a content is intended for children when the viewers include a child, or a condition of whether or not the content is provided with subtitles when the viewers include an aged person. Specifically, steps S150 to S155 in Fig. 12 will be executed.

Subsequently, in a case where any of the above-described conditions is fulfilled, the process proceeds to step S195, and the computation unit 15 performs the processing [A1], in other words, selects a child or an aged person as a target user.

In a case where the conditions of step S191 are not fulfilled, the process proceeds to step S192, and the computation unit 15 checks whether or not interest degree information can be obtained.

If the interest degree information can be obtained, the process proceeds to step S196, and the computation unit 15 performs the processing [A3], in other words, selects a user having a high interest degree as a target user. For example, an interest degree of each user is determined by interest degree $R = f(Y1, Y2, Y3)$, and is compared so as to determine a target user.

In a case where interest degree information cannot be obtained, the process proceeds to step S193, and the computation unit 15 determines whether or not measurement of the concentration degree has been completed. For example, at the time at which the process first proceeds to step S193, the computation unit 15 starts calculating a concentration degree of each user. Since the concentration-degree calculation requires a certain time, the concentration-degree calculation is not completed at the beginning. Accordingly, at the time at which the calculation is not completed, the process proceeds to step S198, and the computation unit 15 performs the processing [A5], in other words, selects, as a target user, a user who locates closest to a screen. Subsequently, the process proceeds to step S108 in Fig. 9.

Even after that, the processing of the computation unit 15 in Fig. 9 is repeated, and if the situation (the user and the content) does not change, the process proceeds to step S109 in Fig. 9 and step S193 in Fig. 14 every time.

Subsequently, if calculation of a concentration degree of each user has been completed at a certain time point at which the process proceeds to step S193, the process proceeds to step S197, and the computation unit 15 performs the processing [A2], in other words, selects, as a target user, a user having a high concentration degree.

As with Fig. 14 described above, even by combining the [A1] to [A5] that are prioritized, output setting control corresponding to various situations can be performed.

Needless to say, not all of the techniques [A1] to [A5] but a part of the techniques [A1] to [A5] may be combined.

In addition, the priority order for the case of Fig. 14 is [A4], [A1], [A3], [A2], [A5] in decreasing order of priority. However, a target user may be determined by performing the processing in the priority order different therefrom.

<7. Processing according to third embodiment: Multiuser support II>

As the third embodiment, an example in which in a case where a plurality of users exists, each user is supported will be described.

For example, a case where two users exist in front of the television device 2 is assumed. In this case, a target user is not one user, but each of the two users is selected as a target user, and how to output an image and a sound is changed according to respective positions of the two users.

Techniques [B1] to [B4] will be presented as follows.

[B1] Support by screen separation

For example, a screen in the television device 2 is separated, and is brought into a state of displaying right and left two screens. It is assumed that an image on the left side when facing the television device 2 is based on output settings suitable for the user on the left side, and that an image on the right side when facing the television device 2 is based on output settings suitable for the user on the right side.

[B2] Gradually change output settings in right and left directions

A screen in the television device 2 is not separated, and image output setting values are configured to gradually change stepwise in the right and left different directions in such a manner that the image output setting values for the right side (gradually and naturally) achieve favorite image quality of a person existing on the right side, and the image output setting values for the left side (gradually and naturally) achieve favorite image quality of a person existing on the left side. In addition, sounds are output at favorite sound qualities and sound volumes of respective users by using right and left speakers.

[B3] Sound is differently output according to user's position from screen vibration speaker

For example, there is the television device 2 that functions as a speaker by vibrating a screen including an organic EL panel. In this case, by mounting vibration actuators, the screen is caused to vibrate, and sounds are output.

In this case, for example, it is assumed that output settings of audio signals given to a vibration actuator on the left side and a vibration actuator on the right side, are fitted to the respective left and right users. Consequently, a sound on the left side when facing the television device 2 becomes a sound preferable for the user on the left side, and a sound on the right side when facing the television device 2 becomes a sound preferable for the user on the right side.

[B4] Image and sound qualities are changed corresponding to a user's favorite in combination with object recognition (a person, an object, etc.) of a content

For example, in a case where plural persons including a child exist, image quality favorable for the child is used only for favorite characters of the child.

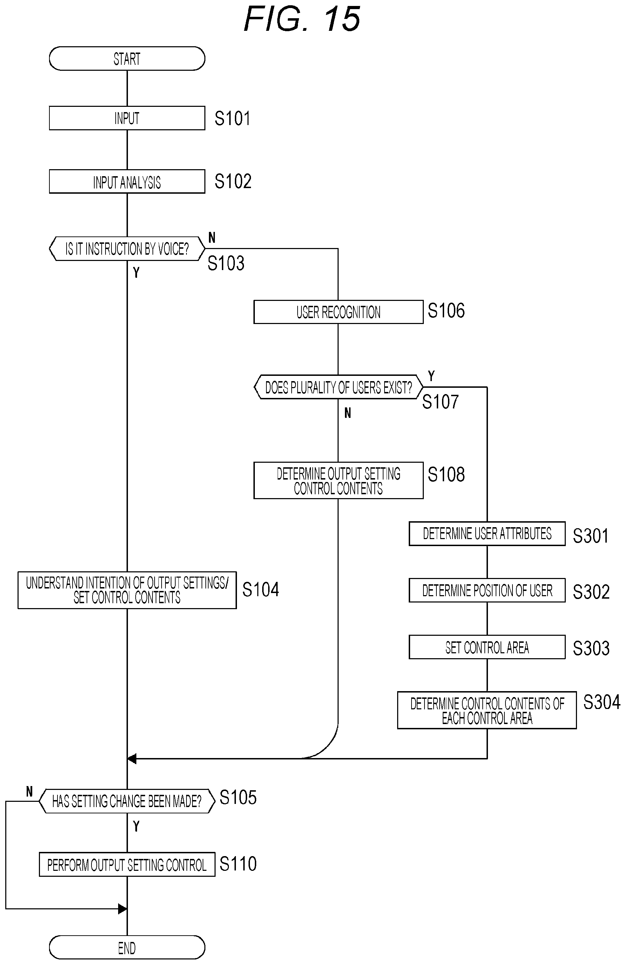

For example, such a processing example of the computation unit 15 as the third embodiment is shown in Fig. 15. It should be noted that in Fig. 15, steps S101 to S110 are similar to those shown in Fig. 9, and therefore the explanation thereof will be omitted. In this Fig. 15, in a case where a plurality of users has been detected in step S107, processing of steps S301 to S304 is executed.

In step S301, the computation unit 15 performs attribute determination of each user. Not only the attribute determination but also individual determination may be performed.

In step S302, the computation unit 15 determines a position of each user. For example, the order in which each user is located in the left-to-right direction is determined.

In step S303, control areas are set. These control areas are set on a screen, and output setting values in each control area are controlled to differ among the control areas.

In step S304, the computation unit 15 determines control contents of output settings for each control area.

In other words, the control contents are determined in such a manner that output settings suitable for a user corresponding to a position of each control area are made. Subsequently, pieces of processing of steps S105 and S110 are performed.

For example, in the case of the example of [B2], the control areas are set in the right-and-left direction of the screen in multiple stages. In addition, the image output setting value I(il) obtained from, for example, the setting management information in Fig. 10 corresponding to the user on the left side is used for the leftmost control area when facing the television device 2. The image output setting value I(ir) obtained from the setting management information in Fig. 10 corresponding to the user on the right side is used for the rightmost control area when facing the television device 2.

A plurality of middle control areas from the left side to the right side are configured in such a manner that each of output setting values such as brightness and sharpness gradually changes from a value indicated by the image output setting value I(il) toward a value indicated by the image output setting value I(ir).

In addition, the audio output setting value S(il) obtained from the setting management information corresponding to the user on the left side is used for an audio signal output from the left speaker, and the audio output setting value S(ir) obtained from the setting management information corresponding to the user on the right side is used for an audio signal output from the right speaker.

It should be noted that in the setting management information in Fig. 10, I(il) and S(il) indicate output setting values registered corresponding to a user ID of a user on the left side, and I(il) and S(il) indicate output setting values registered corresponding to a user ID of a user on the right side.

For example, by causing each area of the screen or each speaker to take charge of a user corresponding thereto in this manner, output setting control corresponding to a plurality of users can be made.

It should be noted that other examples like the above-described [B1] to [B4] can also be considered. In addition, only one of those techniques may be used, or the plurality of techniques may be combined in response to a situation.

<8. Processing according to fourth embodiment: Use of external analytical engine>

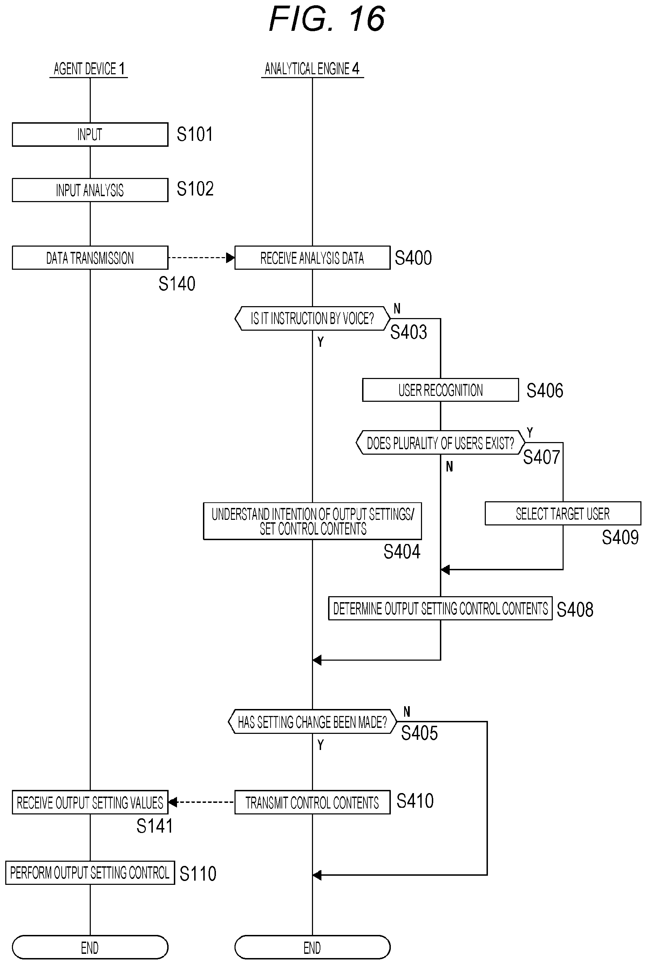

As the fourth embodiment, Fig. 16 shows a processing example applied in a case where the external analytical engine 4 is used as shown in Fig. 1C (Fig. 7) and Fig. 1D (Fig. 8). In Fig. 16, processing of the agent device 1 is shown on the left side, and processing of the analytical engine 4 is shown on the right side.

As the processing of the agent device 1 (the computation unit 15), steps S101 and S102 are similar to steps S101 and S102 in Fig. 9.

In other words, in step S101, the computation unit 15 accepts an input from the sensing apparatus 5 by using the function of the input control unit 71, and in step S102, the computation unit 15 performs processing of bringing the accepted audio and image signals into a state in which the signals can be handled by the analytical engine 4 as data.

Subsequently, in step S140, the computation unit 15 transmits the data, which can be handled by the analytical engine 4, to the analytical engine 4.

As shown in Figs. 7 and 8, the analytical engine 4 performs processing of steps S400 to S410 by using functions as the analysis unit 80 and the output setting control unit 90.

When the analytical engine 4 receives analysis data from the computation unit 15 in step S400, the analytical engine 4 determines control contents of output settings as necessary by processing of steps S403 to S409.

Steps S403 to S409 are similar to steps S103 to S109 that correspond to the processing of the computation unit 15 of Fig. 9, and therefore the explanation thereof will be omitted.

Subsequently, in a case where the analytical engine 4 has determined, in step S405, that settings have been changed, the process proceeds to step S410, and the analytical engine 4 transmits information related to the control contents of the output settings (an image output setting value and an audio output setting value) to the agent device 1.

When the computation unit 15 of the agent device 1 receives the image output setting value and the audio output setting value in step S141, the computation unit 15 performs output setting control in step S110. In other words, the computation unit 15 outputs the received output setting values to the control unit 32 of the television device 2.

Consequently, by the control of the control unit 32, output settings in the audio processing unit 24 and the image processing unit 26 are changed to a state suitable for the detected user.

In addition, in this processing example, by causing the analytical engine 4 to execute the analysis processing of steps S403 to S409 (that is to say, the analysis processing of steps S103 to S109 in Fig. 9), a processing load of the agent device 1 is reduced.

Incidentally, with respect to the analytical engine 4, the output setting values are determined, and are then transmitted to the agent device 1. However, it can also be considered that only a user identification result is transmitted to the agent device 1, or selection information of a target user is transmitted to the agent device 1.

In other words, how to distribute the processing between the agent device 1 and the analytical engine 4 can be variously considered.

<9. Summary and modified examples>

According to the embodiments described above, the following effects can be achieved.

The agent device 1 shown in Fig. 1A (Fig. 2) and Fig. 1B (Fig. 6) according to the embodiment is provided with: the input management unit 70 that inputs, as an analysis target, a signal obtained by the sensing apparatus 5, and generates analysis target data on the basis of the input signal; the analysis unit 80 that analyzes the analysis target data generated by the input management unit 70 to perform user identification; and the output setting control unit 90 that makes output settings by using user identification information obtained by user identification of the analysis unit 80, the output settings being settings related to image output or audio output.

This enables settings of image and sound qualities in response to, for example, a user who is viewing a program on the television device 2. Even if the user does not perform troublesome operation such as image quality adjustment and sound quality adjustment by himself/herself, the user is able to enjoy viewing in a state of image and sound qualities that are comfortable for the user.

A desirable image quality at the time of viewing, and the sound quality and sound volume that are desired, may subtly differ on a user basis. However, changing the settings by each user each time is very troublesome, and is not realistic. In the present embodiment, image and sound qualities, and a sound volume are set by using a result of user identification, and therefore each user can view in a more suitable viewing environment without performing troublesome operation.

In addition, even if a user who is viewing a program changes, or even if a program changes, output settings are controlled in response to such a situation, and therefore even if a change in situation has occurred, a comfortable viewing environment can always be provided without placing an operation load on the user.

It should be noted that the output setting control unit 90 may merely perform the setting control of the sound quality and the sound volume. The output setting control unit 90 may merely perform the setting control related to an image such as an image quality.

In addition, as described in the embodiments, the user identification may be identification of each individual user, or identification of user attributes.

The embodiment has described the example in which the computation unit 15 (the output setting control unit 90) obtains output setting values corresponding to user's attributes, and information as output setting values of each individual user, on the basis of user identification information, and makes output settings by using these pieces of information (refer to S108 and S110 in Fig. 9).

This enables settings of image and sound qualities in which attributes, favorites, a physical situation (hard-of-hearing, etc.) and the like of, for example, a user who is viewing a program on the television device 2 are reflected. A user can automatically obtain a viewing environment in which the user personally feels comfortable.

Incidentally, in step S108 in Fig. 9 or the like, the setting management information (Fig. 10) that is a table of combinations of user identification information and content information is used. However, setting management information that stores output setting values Ii and Si corresponding to user identification information without distinguishing a content may be used.

The embodiment has described the example in which output settings are made by using user identification information, and content information related to a content being output from the television device 2 that is an image or audio output apparatus (refer to Figs. 9, 10, and 12).

For example, output settings are made by combining content information indicating contents, a type, and the like of a content that is being viewed by the television device 2 with user identification information.

Consequently, states of image output and audio output that are appropriate for a combination of the content and the user are automatically set. For example, in a case where a content is a program intended for children, and a situation in which a child is viewing the program has been detected as a result of user identification, output settings that are suitable for the situation in which the child is viewing the program intended for children are made. For example, the output settings include settings that do not increase the brightness too high, settings that are fitted to favorites of the child, and the like. In addition, if an aged person is viewing a program with subtitles, settings can also be made in such a manner that a sound volume is turned up or a character size of subtitles are made large.

In addition, even in a genre such as sports and animation, a desired image quality, and the sound quality and sound volume that are desired, may subtly differ depending on a person, and changing settings each time is very troublesome, and is not realistic. However, in the case of the present embodiment, since elements of settings include content information, settings of the image quality, sound quality, and sound volume made in accordance with an individual content and an individual content genre are realized, and therefore a user can obtain a more suitable viewing environment without performing troublesome operation.

The agent device 1 according to the embodiment is provided with the user information management unit 83 that performs storage management of output settings corresponding to a combination of user identification information and content information.

In other words, the user information management unit 83 performs processing of storing setting management information (refer to Fig. 10) in an inside or external storage device (for example, the memory unit 17), the setting management information recording image output settings and audio output settings, which are considered to be usually made by each user, in a combination of an individual user and an individual content such as a program. In addition, the user information management unit 83 is capable of reading, from the storage device, the image output setting value Ii and the audio output setting value Si that are estimated to be appropriate corresponding to a combination of user identification information and content information.

For example, as shown in Fig. 10, the setting values are tabled in such a manner that the image output setting value Ii and the audio output setting value Si are stored for each combination of a content ID and a user ID. Consequently, states of image output and audio output that are appropriate for a combination of a content and a user are managed, and output settings suitable for a situation in which the combination has been detected can be discriminated.

The embodiment has described the example in which stored contents (the setting management information in Fig. 10) of output settings corresponding to a combination of user identification information and content information are updated by using user's operation information related to image output settings or audio output settings.

For example, as shown in Fig. 11, by using an operation log indicating operation of each user, operation related to the sound volume, the sound quality, the image quality, or the like by each user is learned, and output settings desired by each user are learned on a program basis. The setting management information in Fig. 10 is updated according to the learning. This enables keeping the setting management information in a state in which output setting values suitable for each user are stored. Therefore, the output settings that use the setting management information can support a user's situation at each time point.

As described above, the case is not limited to each individual user, for example, even in a case where a table of setting management information is formed in combinations of user attributes and content information, it is possible to detect user attributes of an operator, and thereby to update the setting management information, which can support a user's situation at each time point.

The embodiment has described the example in which in a case where the computation unit 15 (the output setting control unit 90) has detected a plurality of users by user identification information, the computation unit 15 selects a target user, and makes output settings corresponding to the target user (refer to S109 in Fig. 9, and Figs. 12 to 14).

In a case where a plurality of users exists, since favorites and a physical situation differ on an individual user basis, it is difficult to perform control corresponding to all users. However, in particular, if a main user can be selected, the user is only required to be selected as a target user. The main user can be determined by a situation, a content type, or the like of each user. Accordingly, in a case where a plurality of users exists, by selecting a target user to make output settings (S107 → S109 in Fig. 9), a desirable output environment is generated.

The embodiment has described the example in which in a case where a plurality of users has been detected, a target user is selected by using user attribute information (refer to Figs. 12 and 14).

For example, in a situation in which a plurality of persons exists, attributes such as an age of each user are checked, and the attributes are used as one element for selecting a target user.

For example, according to contents of a content, users who mainly view the content can be estimated by attributes. For example, in the case of a program intended for children, children mainly view the program, in the case of a program of current topics, adults mainly view the program, and in the case of a program with subtitles, aged people mainly view the program. Accordingly, main viewers are estimated by user attribute information, and are selected as target users. Consequently, even in a case where a plurality of users exists, output settings that are fitted to users who are main viewers can be realized.

The embodiment has described the example in which in a case where a plurality of users has been detected, a target user is selected by using information related to the concentration degree of each user (refer to Figs. 13 and 14).

For example, in a situation in which a plurality of persons exists, a concentration degree of each user is measured, and a result of the measurement is used as one element for selecting a target user.

By measuring concentration degrees, a user who is most earnestly viewing can be determined. In this case, the earnest user is selected as a target user, and output settings fitted to this user are made. Consequently, even in a case where a plurality of users exists, output settings that are fitted to users who are main viewers can be realized. In addition, it is possible to prevent, for example, a user who is viewing a program while operating a smartphone, what is called, a user who is "viewing while doing something else", from being selected as a target user, and therefore a more appropriate target user can be selected.

The embodiment has described the example in which in a case where a plurality of users has been detected, a target user is selected by using interest degree information of each user (refer to Fig. 14).

For example, in a situation in which a plurality of persons exists, an interest degree of each user is determined, and a result of the determination is used as one element for selecting a target user. An interest degree of each user often varies depending on a content. Needless to say, it can be estimated that a user having a high interest degree is a user who is most earnestly viewing. For this reason, information of an interest degree is used for selecting a target user. Consequently, even in a case where a plurality of users exists, output settings that are fitted to a user who is a main viewer can be realized.

The embodiment has described the example in which in a case where a plurality of users has been detected, a target user is selected by using information of a purchaser of a content that is being output from an image or audio output apparatus (refer to Fig. 14).

For example, it is also considered that a person who has purchased the content wants to view the content in a viewing environment suitable for the person himself/herself, and it is estimated that actually the person is strongly interested in the content. For this reason, information of the purchaser is used for selecting a target user. Consequently, even in a case where a plurality of users exists, output settings that are fitted to a user who is a main viewer can be realized.

The embodiment has described the example in which in a case where a plurality of users has been detected, a target user is selected by using information of a distance from an image or audio output apparatus (refer to Fig. 14).

For example, in a situation in which a plurality of persons exists in front of the television device 2, information of a distance from a screen of the television device 2 is obtained, and the distance is used as one element for selecting a target user.

In many cases, as a person is more earnestly viewing, a distance between the person and the television device 2 gets closer. Therefore, the distance is also used as an element for determining a main viewer. In addition, a person who is closer to a screen becomes more sensitive to an image and a sound. Consequently, even in a case where a plurality of users exists, output settings that are fitted to a main viewer or a user who is largely influenced by an image and a sound can be realized.

In the embodiment, the computation unit 15 (the analysis unit 80) performs processing of recognizing an operation instruction of a user from an input signal obtained by the sensing apparatus 5 (S104 in Fig. 9).

For example, in a case where a user has indicated an intention of operation by a voice, the voice is recognized.

In addition, in the case of a voice operation as shown in the processing in Fig. 9, by giving a higher priority to the voice operation than to user recognition, output settings fitted to a user' intention are realized.

Consequently, a voice operation system is constructed, and in the system, settings are made in such a manner that settings based on other than voice operation or the like are based on user recognition. In this case, even if a user does nothing, output settings appropriate for a user who is viewing a program are made, and the user is capable of making arbitrary output settings by giving an instruction by a voice or the like as necessary.

It should be noted that the embodiment has mentioned the example in which an uttered voice is recognized as operation. However, an operation intention may be recognized by detecting a user's gesture from a captured image.

In addition, in these cases, the sensing apparatus 5 also serves as sensing of voice operation, gesture operation, and the like, and therefore a system in which a user's intention is appropriately reflected can be constructed.

In the embodiment, the computation unit 15 (the analysis unit 80) is configured to perform processing of determining contents of a user's operation instruction by subjecting an audio input signal obtained by the sensing apparatus 5 to language determination related to output settings (S104 in Fig. 9).

In other words, with respect to a voice uttered by a user, what uttered contents are intended for are recognized by referring to, for example, a database. Contents of a voice operation instruction are determined in this manner.

For example, in general, a user often expresses a desire by using vague words. Those words includes, for example, "I would like to increase sharpness more" (sharpness settings are desired), and "a high frequency sound is emphasized" (equalizer adjustment is desired), as described above. For example, by storing settings that should be associated with these words, words sensuously spoken by a user are understood, and thereby desired output settings can be made. With this configuration, a user is not restricted to use appropriate words, which facilitates operations by words significantly.

The embodiment has described the example in which image quality settings of an output image of an image output apparatus are made as output settings. For example, as an image quality of an image output apparatus such as a television device, settings related to an image quality such as brightness, color, sharpness, contrast, and noise reduction are made.

Consequently, image quality settings corresponding to a user are realized.

In addition, the example in which settings of a sound volume or a sound quality of an output sound of an audio output apparatus are made as output settings has been mentioned. For example, settings related to a sound volume level and a sound quality (low-frequency emphasis, high-frequency emphasis, equalizing, noise cancellation, etc.) are made for an audio output apparatus such as an audio apparatus and a television device. Consequently, sound volume/sound quality settings corresponding to a user are realized.

The agent device 1 in Fig. 1C (Fig. 7) and Fig. 1D (Fig. 8) according to the embodiment is provided with: the input management unit 70 that generates analysis target data on the basis of an input signal obtained by the sensing apparatus 5; and the analysis information obtaining unit 100 that obtains information for settings related to image output or audio output as an analysis result of analyzing the analysis target data generated by the input management unit 70.

For example, the agent device 1 is built into an electronic apparatus such as the television device 2 and an audio device (not illustrated), or provided separately from these electronic apparatuses and cooperates therewith.

In addition, the agent device 1 obtains an analysis result of analyzing an input signal as an audio signal and a captured image signal, for example, setting information related to image output or audio output, information of a user identification result, and the like by internal analysis or external analysis. In Fig. 15, the example in which the information is obtained from the analytical engine 4 has been described.

This enables obtaining required information in such a manner that settings of image and sound qualities are made in response to, for example, a user who is viewing a program on the television device 2.

Moreover, by performing the output setting control of the television device 2 and the like on the basis of the information for settings related to image output or audio output, even if the user does not perform troublesome operation such as image quality adjustment and sound quality adjustment by himself/herself, the user is able to enjoy viewing in a state of image and sound qualities that are comfortable for the user.

It should be noted that the output setting control unit 90 may merely perform the setting control of the sound quality and the sound volume, or may merely perform the setting control related to an image such as the image quality.

It should be noted that the analysis unit 80 included in the agent device 1 in Fig. 1A (Fig. 2) and Fig. 1B (Fig. 6) also performs processing of obtaining information for settings related to image output or audio output as an analysis result of analyzing the analysis target data generated by the input management unit 70, and therefore also serves as the analysis information obtaining unit 100 described here.

The example in which the computation unit 15 (the analysis information obtaining unit 100) according to the embodiment transmits analysis target data to the external analytical engine 4, and obtains information for settings related to image output or audio output from the analytical engine 4 has been described (refer to Fig. 16) .

This enables system construction that uses the external analytical engine 4, and a reduction in processing load as the agent device 1 can be realized.

For example, as with the agent device 1 in Fig. 1C, Fig. 1D, by causing the external analytical engine 4 to execute the analysis, a system that enhances user's convenience while reducing a processing load of the agent device 1 itself can be constructed.

Meanwhile, by providing the configuration in Fig. 1A, Fig. 1B with the analysis unit 80, a communication load can be reduced.

The program according to the embodiment is a program that causes, for example, a CPU, a DSP and the like, or a device that includes them, to execute the processing in Figs. 9, 11, 12, 13, 14, 15, 16 described in the above-described embodiments.

In other words, the program according to the embodiment is a program that causes an information processing device to execute processing of inputting, as an analysis target, a signal obtained by the sensing apparatus 5, subjecting analysis target data based on the input signal to analysis including user identification, and making output settings that are settings related to image output or audio output by using user identification information obtained by the user identification.

In addition, another program according to the embodiment is a program that causes an information processing device to execute processing of inputting, as an analysis target, a signal obtained by the sensing apparatus 5, and obtaining information for settings related to image output or audio output as an analysis result of analyzing analysis target data based on the input signal.

The agent device 1 (the information processing device) described above can be realized by such a program.

Such a program can be recorded beforehand in a HDD as a recording medium built into an apparatus such as a computer device or in a ROM or the like in a microcomputer having a CPU.

Alternatively, such a program can be temporarily or permanently stored (recorded) in a removable recording medium such as a flexible disk, a compact disc read only memory (CD-ROM), a magnet optical (MO) disk, a digital versatile disc (DVD), a Blu-ray Disc (registered trademark), a magnetic disk, a semiconductor memory, and a memory card. Such a removable recording medium can be provided as, what is called, package software.

In addition, other than the method in which such a program is installed from the removable recording medium into a personal computer or the like, the program can also be downloaded from a download site through a network such as a LAN and the Internet.

In addition, such a program is suitable for wide provision of the agent device 1 according to the embodiments. For example, by downloading a program into a personal computer, a portable information processing device, a home electric appliance, a recording and reproducing apparatus, broadcast equipment, a portable telephone, a game apparatus, a video device, a personal digital assistant (PDA), or the like, the personal computer or the like can be used as the information processing device of the present disclosure.

It should be noted that the effects described in the present description are to be construed as merely illustrative, and are not limitative, and other effects may be produced.

It should be noted that the present technology can also employ the following configurations.

(1) An information processing device including:

an input management unit that inputs, as an analysis target, a signal obtained by a sensing apparatus;
an analysis unit that subjects analysis target data based on the signal input by the input management unit to analysis including user identification; and
an output setting control unit that makes output settings by using user identification information obtained by the user identification of the analysis unit, the output settings being settings related to image output or audio output.

(2) The information processing device set forth in the preceding (1), in which
the output setting control unit makes the output settings by using information obtained on the basis of the user identification information.
(3) The information processing device set forth in the preceding (1) or (2), in which
the output setting control unit makes the output settings by using the user identification information, and content information related to a content that is being output from an image or audio output apparatus.
(4) The information processing device set forth in any of the preceding (1) to (3), further including
a user information management unit that performs storage management of the output settings corresponding to a combination of the user identification information and content information.
(5) The information processing device set forth in the preceding (4), in which
the user information management unit updates stored contents of the output settings corresponding to a combination of the user identification information and content information by using user's operation information related to image output settings or audio output settings.
(6) The information processing device set forth in any of the preceding (1) to (5), in which
in a case where a plurality of users has been detected on the basis of the user identification information, the output setting control unit selects a target user, and makes the output settings corresponding to the target user.
(7) The information processing device set forth in the preceding (6), in which
the output setting control unit selects a target user by using user attribute information.
(8) The information processing device set forth in the preceding (6) or (7), in which
the output setting control unit selects a target user by using information related to a concentration degree of a user.
(9) The information processing device set forth in any of the preceding (6) to (8), in which
the output setting control unit selects a target user by using interest degree information of a user.
(10) The information processing device set forth in any of the preceding (6) to (9), in which
the output setting control unit selects a target user by using information of a purchaser of a content that is being output from an image or audio output apparatus.
(11) The information processing device set forth in any of the preceding (6) to (10), in which
the output setting control unit selects a target user by using information of a distance from an image or audio output apparatus.
(12) The information processing device set forth in any of the preceding (1) to (11), in which
processing of recognizing a user's operation instruction from an input signal obtained by the sensing apparatus is performed.
(13) The information processing device set forth in the preceding (12), in which
processing of determining contents of a user's operation instruction is performed by subjecting an audio input signal obtained by the sensing apparatus to language determination related to the output settings.
(14) The information processing device set forth in any of the preceding (1) to (13), in which
the output settings are image quality settings of an output image of an image output apparatus.
(15) The information processing device set forth in any of the preceding (1) to (14), in which
the output settings are settings of a sound volume or sound quality of an output sound of an audio output apparatus.
(16) An information processing device including:

an input management unit that inputs, as an analysis target, a signal obtained by a sensing apparatus; and

an analysis information obtaining unit that obtains information for settings related to image output or audio output as an analysis result of analyzing analysis target data based on the signal input by the input management unit.

(17) The information processing device set forth in the preceding (16), in which
the analysis information obtaining unit transmits analysis target data to an external analytical engine, and obtains information for settings related to image output or audio output from the analytical engine.
(18) An information processing method executed by an information processing device, the method including:

inputting, as an analysis target, a signal obtained by a sensing apparatus;
subjecting analysis target data based on the input signal to analysis including user identification; and
making output settings that are settings related to image output or audio output by using user identification information obtained by the user identification.

(19) An information processing method executed by an information processing device, the method including:

inputting, as an analysis target, a signal obtained by a sensing apparatus; and
obtaining information for settings related to image output or audio output as an analysis result of analyzing analysis target data based on the input signal.

REFERENCE SIGNS LIST

| | |
|---|---|
| 1 | Agent device |
| 2 | Television device |
| 3 | Network |
| 4 | Analytical engine |
| 5 | Sensing apparatus |
| 11 | Microphone |
| 12 | Image capturing unit |
| 13 | Audio input unit |
| 14 | Image capturing signal processing unit |
| 15 | Computation unit |
| 16 | Communication interface |
| 70 | Input management unit |
| 71 | Input control unit |
| 72 | Input analysis unit |
| 80 | Analysis unit |
| 81 | Setting intention analysis unit |
| 82 | User detection unit |
| 83 | User information management unit |
| 84 | Concentration-degree detection unit |
| 90 | Output setting control unit |
| 91 | Output setting selection unit |
| 92 | Image control unit |
| 93 | Audio control unit |
| 100 | Analysis information obtaining unit |

**Claims**

1.  An information processing device comprising:

    an input management unit that inputs, as an analysis target, a signal obtained by a sensing apparatus;
    an analysis unit that subjects analysis target data based on the signal input by the input management unit to analysis including user identification; and
    an output setting control unit that makes output settings by using user identification information obtained by the user identification of the analysis unit, the output settings being settings related to image output or audio output.

**2.** The information processing device according to claim 1, wherein
the output setting control unit makes the output settings by using information obtained on a basis of the user identification information.

**3.** The information processing device according to claim 1, wherein
the output setting control unit makes the output settings by using the user identification information, and content information related to a content that is being output from an image or audio output apparatus.

**4.** The information processing device according to claim 1, further comprising
a user information management unit that performs storage management of the output settings corresponding to a combination of the user identification information and content information.

**5.** The information processing device according to claim 4, wherein
the user information management unit updates stored contents of the output settings corresponding to a combination of the user identification information and content information by using user's operation information related to image output settings or audio output settings.

**6.** The information processing device according to claim 1, wherein
in a case where a plurality of users has been detected on a basis of the user identification information, the output setting control unit selects a target user, and makes the output settings corresponding to the target user.

**7.** The information processing device according to claim 6, wherein
the output setting control unit selects a target user by using user attribute information.

**8.** The information processing device according to claim 6, wherein
the output setting control unit selects a target user by using information related to a concentration degree of a user.

**9.** The information processing device according to claim 6, wherein
the output setting control unit selects a target user by using interest degree information of a user.

**10.** The information processing device according to claim 6, wherein
the output setting control unit selects a target user by using information of a purchaser of a content that is being output from an image or audio output apparatus.

**11.** The information processing device according to claim 6, wherein
the output setting control unit selects a target user by using information of a distance from an image or audio output apparatus.

**12.** The information processing device according to claim 1, wherein
processing of recognizing a user's operation instruction from an input signal obtained by the sensing apparatus is performed.

**13.** The information processing device according to claim 12, wherein
processing of determining contents of a user's operation instruction is performed by subjecting an audio input signal obtained by the sensing apparatus to language determination related to the output settings.

**14.** The information processing device according to claim 1, wherein
the output settings are image quality settings of an output image of an image output apparatus.

**15.** The information processing device according to claim 1, wherein
the output settings are settings of a sound volume or sound quality of an output sound of an audio output apparatus.

**16.** An information processing device comprising:

an input management unit that inputs, as an analysis target, a signal obtained by a sensing apparatus; and
an analysis information obtaining unit that obtains information for settings related to image output or audio output as an analysis result of analyzing analysis target data based on the signal input by the input management unit.

**17.** The information processing device according to claim 16, wherein
the analysis information obtaining unit transmits analysis target data to an external analytical engine, and obtains information for settings related to image output or audio output from the analytical engine.

**18.** An information processing method executed by an information processing device, the method comprising:

inputting, as an analysis target, a signal obtained by a sensing apparatus;
subjecting analysis target data based on the input signal to analysis including user identification; and
making output settings that are settings related to image output or audio output by using user identification information obtained by the user identification.

**19.** An information processing method executed by an information processing device, the method comprising:

inputting, as an analysis target, a signal obtained by a sensing apparatus; and
obtaining information for settings related to image output or audio output as an analysis result of analyzing analysis target data based on the input signal.

# FIG. 1

A

B

C

D

EP 3 787 304 A1

# FIG. 2

# FIG. 3

EP 3 787 304 A1

# FIG. 4

A

15 — 81

| 71 → INPUT CONTROL UNIT | SETTING INTENTION ANALYSIS UNIT | OUTPUT SETTING SELECTION UNIT ← 91 |

72 → INPUT ANALYSIS UNIT

USER DETECTION UNIT ← 82

INPUT MANAGEMENT UNIT

USER INFORMATION MANAGEMENT UNIT

IMAGE CONTROL UNIT ← 92

70

83

CONCENTRATION-DEGREE DETECTION UNIT

AUDIO CONTROL UNIT ← 93

84

ANALYSIS UNIT

OUTPUT SETTING CONTROL UNIT

80

90

B

15

32

COMPUTATION UNIT

81

CONTROL UNIT

71 → INPUT CONTROL UNIT

SETTING INTENTION ANALYSIS UNIT

OUTPUT SETTING SELECTION UNIT ← 91

72 → INPUT ANALYSIS UNIT

USER DETECTION UNIT

82

INPUT MANAGEMENT UNIT

USER INFORMATION MANAGEMENT UNIT

IMAGE CONTROL UNIT ← 92

70

83

CONCENTRATION-DEGREE DETECTION UNIT

AUDIO CONTROL UNIT ← 93

84

ANALYSIS UNIT

OUTPUT SETTING CONTROL UNIT

80

90

## FIG. 5

```
   171              172              173
   ┌─────┐         ┌─────┐         ┌─────┐
   │ CPU │         │ ROM │         │ RAM │
   └─────┘         └─────┘         └─────┘                   174
                                                              │
  ═══════════════════════════════════════════════════════════════
                              ⇕
         ┌───────────────────────────────────────────────┐
         │           INPUT-OUTPUT INTERFACE               │───175
         └───────────────────────────────────────────────┘
           ⇑        ⇓        ⇕           ⇕            ⇕
       ┌──────┐ ┌──────┐ ┌────────┐ ┌──────────────┐ ┌───────┐
       │INPUT │ │OUTPUT│ │STORAGE │ │COMMUNICATION │ │ DRIVE │──180
       │ UNIT │ │ UNIT │ │  UNIT  │ │    UNIT      │ └───────┘
       └──────┘ └──────┘ └────────┘ └──────────────┘     ⇑
        176      177       178          179         ┌───────────┐
                                                    │ REMOVABLE │──181
                                                    │  MEDIA    │
                                                    └───────────┘
```

170 (COMPUTER DEVICE)

FIG. 6

TELEVISION DEVICE 2

21

22 TUNER

23 DEMULTIPLEXER

24 AUDIO PROCESSING UNIT
25 AUDIO OUTPUT UNIT
26 IMAGE PROCESSING UNIT
27 IMAGE OUTPUT UNIT

30 SPEAKER
31 DISPLAY UNIT

32 CONTROL UNIT
33 MEMORY
34 INPUT UNIT

1

5

11 MIC
12 IMAGE CAPTURING UNIT
13 AUDIO INPUT UNIT
14 IMAGE CAPTURING SIGNAL PROCESSING UNIT

15 COMPUTATION UNIT
70 INPUT MANAGEMENT UNIT
80 ANALYSIS UNIT
90 OUTPUT SETTING CONTROL UNIT

17 MEMORY UNIT

FIG. 7

EP 3 787 304 A1

## FIG. 8

TELEVISION DEVICE 2

- 21 (antenna)
- 22 TUNER
- 23 DEMULTIPLEXER
- 24 AUDIO PROCESSING UNIT
- 25 AUDIO OUTPUT UNIT
- 30 SPEAKER
- 26 IMAGE PROCESSING UNIT
- 27 IMAGE OUTPUT UNIT
- 31 DISPLAY UNIT
- 11 MIC
- 13 AUDIO INPUT UNIT
- 12 IMAGE CAPTURING UNIT
- 14 IMAGE CAPTURING SIGNAL PROCESSING UNIT
- 70 INPUT MANAGEMENT UNIT
- 100 ANALYSIS INFORMATION OBTAINING UNIT
- 15 COMPUTATION UNIT
- 5
- 17 MEMORY UNIT
- 36 NETWORK COMMUNICATION UNIT
- 32 CONTROL UNIT
- 33 MEMORY
- 34 INPUT UNIT
- 3
- 4 ANALYTICAL ENGINE
- 80 ANALYSIS UNIT
- 90 OUTPUT SETTING CONTROL UNIT

EP 3 787 304 A1

# FIG. 9

START

INPUT — S101

INPUT ANALYSIS — S102

IS IT INSTRUCTION BY VOICE? — S103 (N / Y)

USER RECOGNITION — S106

DOES PLURALITY OF USERS EXIST? — S107 (Y / N)

SELECT TARGET USER — S109

UNDERSTAND INTENTION OF OUTPUT SETTINGS/ SET CONTROL CONTENTS — S104

DETERMINE OUTPUT SETTING CONTROL CONTENTS — S108

HAS SETTING CHANGE BEEN MADE? — S105 (N / Y)

PERFORM OUTPUT SETTING CONTROL — S110

END

# FIG. 10

SETTING MANAGEMENT INFORMATION

| INPUT | CONTENT ID | CONTENT NAME | USER ID | IMAGE OUTPUT SETTING VALUE | AUDIO OUTPUT SETTING VALUE |
|---|---|---|---|---|---|
| TV | 000001 | NEWS XX | U1 | I1 | S1 |
| TV | 000001 | NEWS XX | U2 | I2 | S2 |
| TV | 000002 | TODAY'S COOKING | U2 | I3 | S3 |
| TV | 000003 | ANIMATION XXX | U3 | I4 | S4 |
| TV | 000003 | ANIMATION XXX | U4 | I5 | S5 |
| TV | 000004 | BASEBALL | U1 | I6 | S6 |
| TV | 000005 | SOCCER | U1 | I7 | S7 |
| TV | 000005 | SOCCER | U4 | I8 | S8 |
| TV | 000006 | DRAMA XXX | U2 | I9 | S9 |
| TV | 000006 | DRAMA XXX | U3 | I10 | S10 |
| TV | 000006 | DRAMA XXX | U4 | I11 | S11 |
| HDMI1 | | | U3 | I12 | S12 |
| HDMI1 | | | U4 | I13 | S13 |
| HDMI2 | | | U2 | I14 | S14 |
| : | | | : | : | : |

# FIG. 11

START

SAVE OPERATION LOG | S201

CHECK UNREFLECTED LOG IN COMBINATION OF CORRESPONDING USER/CONTENT | S202

IS UPDATE REQUIRED? | S203

N

Y

CALCULATE IMAGE OUTPUT SETTING VALUE/ AUDIO OUTPUT SETTING VALUE | S204

UPDATE SETTING VALUES | S205

REFLECTED LOG ← UNREFLECTED LOG | S206

END

# FIG. 12

S109

OBTAIN CONTENT INFORMATION    S150

ANALYZE USER ATTRIBUTES    S151

IS CONTENT INTENDED FOR CHILDREN?    N
S152
Y

DOES CHILD EXIST?    Y
S153
N

ARE SUBTITLES PROVIDED?    Y
S154
N

N    DOES SENIOR EXIST?
Y    S155

SELECT CHILD AS TARGET USER    S156

SELECT SENIOR AS TARGET USER    S157

SELECT TARGET USER BY OTHER TECHNIQUES    S158

# FIG. 13

S109

CALCULATE CONCENTRATION DEGREE OF EACH USER — S170

HAS CALCULATION BEEN COMPLETED? — S171

N

Y

COMPARE CONCENTRATION DEGREE BETWEEN EACH USER — S172

DETERMINE TARGET USER — S173

# FIG. 14

```
                                              ◯  S109
                                              │
                                              │
                  Y ┌────────────────────────┤
                    │   DOES CONTENT PURCHASER EXIST?   ⟩ S190
                    │                         │
                    │                         N
  ┌──────────────────────┐                    │
  │   PROCESSING A4       │ S194               │
  └──────────────────────┘                    │
         │                                     │
         │                                     │
  ┌──────┘           Y ┌────────────────────────┤
  │                    │ CONTENT INTENDED FOR CHILDREN +  ⟩ S191
  │                    │ CHILD EXISTS, OR CONTENT WITH
  │                    │ SUBTITLES + SENIOR EXISTS?
  │                    │                       │
  │                    │                       N
  │     ┌──────────────────────┐               │
  │     │   PROCESSING A1       │ S195          │
  │     └──────────────────────┘               │
  │            │                                │
  │   ┌────────┘         Y ┌────────────────────┤
  │   │                    │   IS INTEREST DEGREE       ⟩ S192
  │   │                    │ INFORMATION OBTAINABLE?
  │   │                    │                     │
  │   │                    │                     N
  │   │     ┌──────────────────────┐             │
  │   │     │   PROCESSING A3       │ S196        │
  │   │     └──────────────────────┘             │
  │   │            │                             │
  │   │   ┌────────┘        Y ┌──────────────────┤
  │   │   │                   │ HAS CALCULATION OF CONCENTRATION ⟩ S193
  │   │   │                   │ DEGREE BEEN COMPLETED?
  │   │   │                   │                   │
  │   │   │                   │                   N
  │   │   │     ┌──────────────────────┐          │
  │   │   │     │   PROCESSING A2       │ S197     │
  │   │   │     └──────────────────────┘          │
  │   │   │            │                          │
  │   │   │   ┌────────┘    ┌──────────────────────┐
  │   │   │   │             │   PROCESSING A5        │ S198
  │   │   │   │             └──────────────────────┘
  │   │   │   │                       │
  └───┴───┴───┴──────────────────────►│
                                      │
                                      ◯
```

# FIG. 15

```
                    ( START )
                       |
              +--------+--------+
              |     INPUT       |  S101
              +--------+--------+
                       |
              +--------+--------+
              |  INPUT ANALYSIS |  S102
              +--------+--------+
                       |
         < IS IT INSTRUCTION BY VOICE? >----N----+
                       |    S103                 |
                       Y                         |
                       |            +------------+-------------+
                       |            |    USER RECOGNITION      |  S106
                       |            +------------+-------------+
                       |                         |
                       |         < DOES PLURALITY OF USERS EXIST? >----Y----+
                       |                  |       S107                      |
                       |                  N                                 |
                       |                  |                                 |
                       |       +----------+-----------+                     |
                       |       | DETERMINE OUTPUT     |  S108               |
                       |       | SETTING CONTROL      |                     |
                       |       | CONTENTS             |                     |
                       |       +----------+-----------+          +----------+-----------+
                       |                  |                      | DETERMINE USER       |  S301
                       |                  |                      | ATTRIBUTES           |
                       |                  |                      +----------+-----------+
       +---------------+----------+       |                                 |
       | UNDERSTAND INTENTION OF  | S104  |                      +----------+-----------+
       | OUTPUT SETTINGS/         |       |                      | DETERMINE POSITION   |  S302
       | SET CONTROL CONTENTS     |       |                      | OF USER              |
       +---------------+----------+       |                      +----------+-----------+
                       |                  |                                 |
                       |                  |                      +----------+-----------+
                       |                  |                      | SET CONTROL AREA     |  S303
                       |                  |                      +----------+-----------+
                       |                  |                                 |
                       |                  |                      +----------+-----------+
                       |                  |                      | DETERMINE CONTROL    |  S304
                       |                  |                      | CONTENTS OF EACH     |
                       |                  |                      | CONTROL AREA         |
                       |                  |                      +----------+-----------+
                       |                  |                                 |
                       +<-----------------+---------------------------------+
                       |
        +----N--< HAS SETTING CHANGE BEEN MADE? >  S105
        |              |
        |              Y
        |              |
        |     +--------+-----------------+
        |     | PERFORM OUTPUT SETTING   |  S110
        |     | CONTROL                  |
        |     +--------+-----------------+
        |              |
        +------------->|
                       |
                    ( END )
```

# FIG. 16

AGENT DEVICE 1           ANALYTICAL ENGINE 4

| INPUT | S101 |

| INPUT ANALYSIS | S102 |

| DATA TRANSMISSION | | RECEIVE ANALYSIS DATA | S400 |
S140

IS IT INSTRUCTION BY VOICE? N S403
Y

| USER RECOGNITION | S406

DOES PLURALITY OF USERS EXIST? Y S407
N

| UNDERSTAND INTENTION OF OUTPUT SETTINGS/ SET CONTROL CONTENTS |      | SELECT TARGET USER |
S404                    S409

| DETERMINE OUTPUT SETTING CONTROL CONTENTS | S408

HAS SETTING CHANGE BEEN MADE? N S405
Y

| RECEIVE OUTPUT SETTING VALUES | | TRANSMIT CONTROL CONTENTS | S410
S141

| PERFORM OUTPUT SETTING CONTROL | S110

( END )                    ( END )

**EP 3 787 304 A1**

INTERNATIONAL SEARCH REPORT

International application No.

PCT/JP2019/004212

A. CLASSIFICATION OF SUBJECT MATTER
Int. Cl. H04N21/485(2011.01)i, G06F3/01(2006.01)i, G06F3/16(2006.01)i,
G09G5/00(2006.01)i, H04N21/442(2011.01)i

According to International Patent Classification (IPC) or to both national classification and IPC

B. FIELDS SEARCHED

Minimum documentation searched (classification system followed by classification symbols)
Int. Cl. H04N21/485, G06F3/01, G06F3/16, G09G5/00, H04N21/442

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2014/083669 A1 (HITACHI MAXELL, LTD.) 05 June 2014, paragraphs [0013]-[0037], [0068]-[0071], [0084], fig. 1, 3 & EP 2894629 A1, paragraphs [0013]-[0037], [0068]-[0071], [0084], fig. 1, 3 & US 2015/0242986 A1 & CN 104641410 A & SG 112015024320 A | 1-19 |
| X | JP 2012-160918 A (TOSHIBA CORP.) 23 August 2012, paragraphs [0013]-[0044], fig. 2, 3 (Family: none) | 1-19 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search
20.03.2019 | Date of mailing of the international search report
02.04.2019 |
| Name and mailing address of the ISA/
Japan Patent Office
3-4-3, Kasumigaseki, Chiyoda-ku,
Tokyo 100-8915, Japan | Authorized officer

Telephone No. |

Form PCT/ISA/210 (second sheet) (January 2015)

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008028871 A